(19) Europäisches Patentamt
European Patent Office
Office européen des brevets

(11) **EP 1 821 476 A2**

(12) **EUROPEAN PATENT APPLICATION**

(43) Date of publication:
**22.08.2007 Bulletin 2007/34**

(51) Int Cl.:
*H04L 27/26* (2006.01)    *G06F 17/14* (2006.01)

(21) Application number: **07101181.1**

(22) Date of filing: **25.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **17.02.2006 JP 2006041509**

(71) Applicant: **MATSUSHITA ELECTRIC INDUSTRIAL CO., LTD**
**Kadoma-shi, Osaka 571-8501 (JP)**

(72) Inventor: **Karino, Shingo**
**Kadoma-shi Osaka 571-8501 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **OFDM Receiver with Fast Fourier Transform in which Unnecessary Butterfly Operations are Omitted**

(57)    OFDM Receiver with Fast Fourier Transform in which unnecessary butterfly operations are omitted. This is achiebed by only performing the butterfly operations relating to the subcarrier data of interest.

FIG.3

**Description**

**CROSS REFERENCE TO RELATED APPLICATIONS**

The disclosure of Japanese Patent Application No. 2006-041509 filed on February 17, 2006 including the specification, drawings and abstract is incorporated herein by reference in its entirety.

**BACKGROUND OF THE INVENTION**

1. Field of the Invention

The present invention relates to a fast Fourier transformation (FFT) apparatus, OFDM communication apparatus and subcarrier assignment method for OFDM communication, and more particularly, a fast Fourier transformation apparatus, OFDM communication apparatus and subcarrier assignment method for OFDM communication which are used for terrestrial digital broadcasting, wireless LAN and ADSL (Asymmetric Digital Subscriber Line).

2. Description of the Related Art

In recent years, with progress in a digital communication technology and semiconductor integration technology, a high-speed and wideband mobile communication has been developed. Since December in 2003, a digital broadcasting service using a terrestrial wave that adopts an OFDM (Orthogonal Frequency Division Multiplex) scheme as a modulation/demodulation scheme has been provided. The OFDM scheme which efficiently transmits much information in limited frequency band using many subcarriers that are orthogonal to each other, has a feature of being resistant to a multipath disturbance, because of a long symbol period and insertion of guard intervals. Therefore, it is studied to apply the OFDM scheme to mobile communication. However, in the OFDM scheme, it is necessary to perform large-scale fast Fourier transformation of large-scale samples. Moreover, in order to apply the OFDM scheme to mobile communication, some ideas for accomplishing a longer continuous talk time and a longer waiting time of a terminal station driven by a battery are essentially required, and a development of a low power fast Fourier transformation apparatus is an important issue.

As a conventional radio communication method using the OFDM scheme, there is a method disclosed in Unexamined Japanese Patent Publication No. 2003-249908.

Unexamined Japanese Patent Publication No. 2003-249908 discloses a radio communication method, wherein a part of control signals transmitted from a base station to a terminal station is transmitted using a carrier which is allocated near frequency band used for information transmission and whose band is narrower than band for multicarrier signals, and, when the terminal station receives only a part of the control signals, the terminal station receives only the carrier of narrow band to reduce a processing load of signal communication at the base station and the terminal station. Additionally, the part of the control signals transmitted from the base station to the terminal station is transmitted using specific one subcarrer or a plurality of subcarriers within band for multicarrier signals, and, when the terminal station receives only the part of control signals, the terminal station receives only the specific one subcarrer or the plurality of subcarriers within the band for the multicarrier signals to reduce a processing load of signal communication at the base station and the terminal station.

In the OFDM communication system described above, in either one of a technology of allocating the part of the control signals transmitted from the base station to the terminal station near the frequency band used for information transmission and performing transmission using narrower band than the band for multicarrier signals, or a technology of transmitting the part of the control signals transmitted from the base station to the terminal station using specific one or a plurality of subcarriers within the band for the multicarrier signals, when the fast Fourier transformation apparatus for receiving the multicarrier signals receives control signals made up of a part of subcarriers, the fast Fourier transformation apparatus receives not only subcarriers of the control signals but also subcarriers of signals other than the control signals. Thereby, substantial signal processing is required. Moreover, when the terminal station is a mobile terminal that is driven by a battery, there is a problem that a power of the battery is wasted.

The fast Fourier transformation apparatus used for the conventional OFDM communication system performs butterfly operation repeatedly in which processing for repeatedly dividing data obtained by sampling a time-axis waveform at points corresponding to the power of two, into even number data and odd number data, finally rearranges the data in a bit-reversal order, and addition/subtraction after multiplying the sampling data by a rotation factor are performed.

Additionally, in the OFDM communication system described above, even when transmission to a specific receiving station side is performed using a part of effective subcarriers, the butterfly operation is sequentially performed on sampled data for all the subcarriers when the time-axis waveform once subjected to inverse fast Fourier transformation at the transmission side is subjected to fast Fourier transformation at the specific receiving side, and therefore there is a problem that fast Fourier transformation includes unnecessary operation.

This problem also arises in the radio communication method described in Patent Document 1 for reducing a processing load for signal communication at the base station and the terminal station by receiving only a part of the control signals transmitted from the base station at the terminal station.

That is, in order to receive control signals made up of apart of subcarriers, the FFT apparatus for receivingmulticarrier signals performs the butterfly operation on not only subcarriers of the control signals but also all the subcarriers that include subcarrier signals other than the control signals at the same time and performs FFT reception, and therefore substantial signal processing is required. In particular, when the terminal station is a mobile terminal that is driven by a battery, there is a problem that a power of the battery is wasted.

## SUMMARY OF THE INVENTION

It is therefore an object of the present invention to provide a fast Fourier transformation apparatus, OFDM communication apparatus and subcarrier assignment method for OFDM communication which are capable of reducing a power consumed by FFT operation by omitting unnecessary FFT operation upon reception in OFDM communication.

According to an aspect of the invention, there is provided a fast Fourier transformation apparatus having an input terminal to which a first anda second data sequences are inputted as sampling data, a first intermediate node that performs butterfly operation in which a data sequence obtained by multiplying the first data sequence by a complex operation factor is added to or subtracted from the second data sequence, a second intermediate node to which two data sequences obtained by dividing an output of the first intermediate node into two are inputted, and which, with respect to each of the divided two data sequences, performs butterfly operation in which one data sequence multiplied by a complex operation factor is added to or subtracted from the other data sequence, an output terminal that is provided at an output side of the second intermediate node and provided with a plurality of butterfly operation sections for performing butterfly operation in which one data sequence multiplied by a complex operation factor is added to or subtracted from the other data sequence, and a rearranging section that supplies the sampling data arranged in a forward direction with respect to a time axis to the input terminal, wherein, when the sampling data arranged in a forward direction with respect to the time axis is received, specific subcarrier data is extracted from at least one of the plurality of butterfly operation sections of the output terminal.

According to another aspect of the invention, there is provided a fast Fourier transformation apparatus having an input terminal to which a first and a second data sequences are inputted as sampling data, a plurality of intermediate nodes that are provided corresponding to the number of sampling data inputted to the input terminal and perform butterfly operation in which a data sequence obtained by multiplying the first data sequence by a complex operation factor is added to or subtracted from the second data sequence, an output terminal that is provided at an output side of the plurality of the intermediate nodes and performs butterfly operation in which one data sequence multiplied by a complex operation factor is added to or subtracted from the other data sequence, and a rearranging section that supplies the sampling data arranged in a forward direction with respect to a time axis to the input terminal, wherein, out of butter fly operation sections of the plurality of the intermediate nodes and the output terminal, data operated by at least one of butterfly operation sections of the plurality of the intermediate nodes are extracted from the output terminal as specific subcarrier data.

According to another aspect of the invention, there is provided an OFDM communication apparatus which has a base station that transmits an OFDM communication signal to which specific subcarrier data is assigned to a terminal station and a terminal station which receives the OFDM communication signal to extract the specific subcarrier data assigned by the base station, wherein, the base station has an assigning section that assigns sampling data arranged in a forward direction with respect to a time axis to the terminal station as the specific subcarrier data, the terminal station has an input terminal to which a first and a second data sequences are inputted as sampling data, a first intermediate node that performs butterfly operation in which a data sequence obtained by multiplying the first data sequence by a complex operation factor is added to or subtracted from the second data sequence, a second intermediate node to which two data sequences obtained by dividing an output of the first intermediate node into two are inputted, and which, with respect to each of the divided two data sequences, performs butterfly operation in which one data sequence multiplied by a complex operation factor is added to or subtracted from the other data sequence, and an output terminal that is provided at an output side of the second intermediate node and provided with a plurality of butterfly operation sections for performing butterfly operation in which one data sequence multiplied by a complex operation factor is added to or subtracted from the other data sequence, and when the sampling data arranged in a forward direction with respect to the time axis is received from the base station, the specific subcarrier data is extracted from at least one of the plurality of butterfly operation sections of the output terminal.

According to another aspect of the invention, there is provided an OFDM communication apparatus which has a base station that transmits an OFDM communication signal to which specific subcarrier data is assigned to a terminal station, and a terminal station that receives the OFDM communication signal to extract the specific subcarrier data assigned by the base station, wherein, the base station has an assigning section that assigns sampling data arranged in a forward direction with respect to a time axis to the terminal station as the specific subcarrier data, the base station has an assigning section that assigns sampling data arranged in a bit reversal direction with respect to a time axis to the terminal station as the specific subcarrier data, the terminal station has an input terminal to which a first and a second data sequences are inputted as the sampling data, a plurality of intermediate nodes that are provided corresponding to the number of the sampling data inputted to the input terminal and perform butterfly operation in which a data sequence obtained by multiplying the first data sequence by a complex operation factor is added to or subtracted from the second data sequence, and an output terminal that is provided at an output side of the plurality of the intermediate nodes and provided with a plurality of butterfly operation sections for performing butterfly operation in which one data sequence multiplied by a complex operation factor is added to or subtracted from the other data sequence, and out of butterfly operation sections of the plurality of the intermediate nodes and the output terminal, data operated by at least one of butterfly operation sections of the plurality of the intermediate nodes are extracted from the output terminal as the specific subcarrier data.

According to another aspect of the invention, there is provided a subcarrier assignment method for OFDM communication, wherein an OFDM communication signal to which specific subcarrier data is assigned is transmitted from a base station to a terminal station and the OFDM communication signal is received to extract the specific subcarrier data assigned by the base station, the method having, in the base station, assigning sampling data arranged in a forward direction with respect to a time axis to the terminal station as the specific subcarrier data, and in the terminal station, inputting a first and a second data sequences transmitted from the base station as sampling data, performing first butterfly operation in which a data sequences obtained by multiplying the first data sequence by a complex operation factor is added to or subtracted from the second data sequence, performing second butterfly operation with an output of the first butterfly operation which is divided into two and inputted, in which one data sequence multiplied by a complex operation factor is added to or subtracted from the other data sequence, and performing a plurality of butterfly operation in which one data sequence multiplied by a complex operation factor is added to or subtracted from the other data sequence at an output side of the second butterfly operation, wherein, when the sampling data arranged in a forward direction with respect to the time axis is received from the base station, the specific subcarrier data is extracted from at least one of the plurality of butterfly operation.

According to another aspect of the invention, there is provided a subcarrier assignment method for OFDM communication, wherein an OFDM communication signal to which specific subcarrier data is assigned is transmitted from a base station to a terminal station and the OFDM communication signal is received to extract the specific subcarrier data assigned by the base station, the method having, in the base station, assigning sampling data arranged in a bit reversal direction with respect to a time axis to the terminal station as the specific subcarrier data, in the terminal station, inputting a first and a second data sequences transmitted from the base station as sampling data, performing first butterfly operation in which a data sequence obtained by multiplying the first data sequence by a complex operation factor is added to or subtracted from the second data sequence, and performing second butterfly operation in which one data sequence multiplied by a complex operation factor is added to or subtracted from the other data sequence at an output side of the first butterfly operation, wherein in the step of performing the butterfly operation, thespecificsubcarrier dataisextracted by performing only the butterfly operation relating to extraction of the specific subcarrier data out of the first butterfly operation and the second butterfly operation.

## BRIEF DISCRIPTION OF THE DRAWINGS

FIG. 1 shows a configuration of a base station of an OFDM communication apparatus according to Embodiment 1 of the present invention;

FIG. 2 shows a configuration of a terminal station of an OFDM communication apparatus according to Embodiment 1 of the present invention;

FIG. 3 shows a configuration of butterfly operation unit of an FFT section according to Embodiment 1 of the present invention;

FIG. 4 describes a rotation factor in butterfly operation for the case where the number of points of sampling data is eight;

FIG. 5 shows a relationship between sampling data of an OFDM signal and subcarrier data obtained using the sampling data in butterfly operation for the case where the number of points of sampling data is eight;

FIG. 6 shows a configuration of the butterfly operation unit of the FFT section according to Embodiment 2 of the present invention;

FIG. 7 explains a rotation factor in the butterfly operation for the case where the number of points of sampling data is sixteen;

FIG. 8 shows a relationship between sampling data of an OFDM signal and subcarrier data obtained using the sampling data in butterfly operation for the case where the number of points of sampling data is sixteen;

FIG. 9 shows a configuration of a terminal station of the OFDM communication apparatus according to Embodiment 3 of the present invention;

FIG. 10 shows a configuration of the butterfly operation unit of the FFT section according to Embodiment 3 of the present invention;

FIG. 11 is a frequency characteristic diagram showing an example of a conventional carrier arrangement; and

FIG. 12 shows a configuration of the butterfly operation unit for the case where the number of points of sampling data at the FFT section according to Embodiment 3 of the present invention is sixteen.

DETAILED DESCRIPTION OF THE PREFERED EMBODIMENT

Embodiments of the present invention will be described in detail below with reference to the accompanying drawings.

(Embodiment 1)

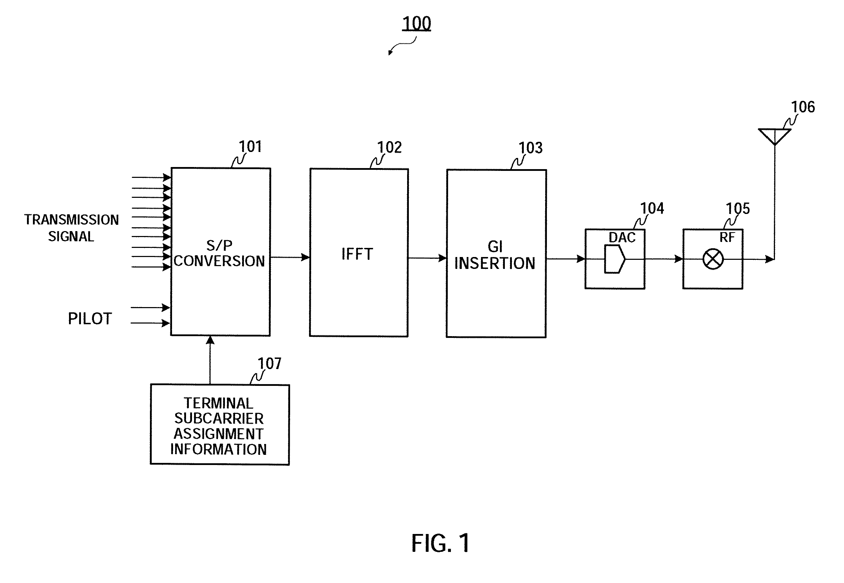

FIG. 1 shows a configuration of a base station of an OFDM communication apparatus according to Embodiment 1 of the present invention.

In FIG. 1, base station 100 includes serial-parallel converting section (referred to as "S/P converting section") 101, inverse fast Fourier transformation (IFFT) section 102, guard interval insertion section (referred to as "GI insertion section") 103, digital-analog converting section (referred to as "D/A converting section") 104, RF (Radio Frequency) transmitting section 105 and transmitting antenna 106. Additionally, base station 100 includes terminal subcarrier assignment information storing section 107 that stores terminal subcarrier assignment information for assigning subcarriers to a specific terminal. Terminal subcarrier assignment information storing section 107 has a function as an assigning section that assigns sampling data arranged in a forward direction with respect to a time axis, to a terminal station as specific subcarrier data.

S/P converting section 101 parallelizes transmission signals which are data symbols for serial transmission to which subcarriers are assigned and which include data transmitted to a plurality of terminal stations, according to terminal subcarrier assignment information read out from terminal subcarrier assignment information storing section 107 and a pilot signal whose symbol information to be transmitted is known, and converts the transmission signals to obtain a plurality of sequences of data signals. Thus, the transmission signals are converted into digital signals.

Terminal subcarrier assignment information is information indicating subcarriers assigned to the transmission signal that is transmitted to a specific terminal station out of transmission signals including data to be provided to a plurality of terminal stations, that is information indicating a correspondence relation between subcarrier data included in the transmission signal and a terminal station to which the subcarrier data is assigned. By assigning subcarriers to each terminal station according to the terminal subcarrier assignment information, it is possible to omit a part of butterfly operation at the FFT section of each terminal station described later. Furthermore, in a transmission signal transmitted to each terminal station, sampling data arranged in a forward direction with respect to a time axis is assigned as specific subcarrier data to be assigned to each terminal station. A method for assigning subcarriers to terminal stations is described in detail later.

IFFT section 102 performs inverse fast Fourier transformation processing on a signal from S/P converting section 101 and converts the transmission signal into a signal in the time domain. The transmission signal to the terminal station is subjected to frequency division multiplexing and OFDM modulation by S/P converting section 101 and IFFT section 102.

GI insertion section 103 inserts guard intervals to an OFDM modulated signal from IFFT section 102 and also performs windowing processing so as to make rising and falling of an OFDM symbol smooth. By this means, it is possible to prevent deterioration due to intersymbol interference generated on a multipath transmission path. Insertion of the guard intervals is performed by inserting a cycle prefix, for example.

D/A converting section 104 performs D/A conversion processing on the OFDM modulated signal from GI insertion section 103 and converts this signal into an analog signal.

RF transmitting section 105 performs predetermined radio signal processing (such as filtering, vector modulation, up-conversion, transmission power control and amplification) on the OFDM modulated signal from D/A converting section 104 and transmits the processed signal to the terminal station which is a communicating party of radio communication via transmitting antenna 106.

Transmitting antenna 106 transmits the signal from RF transmitting section 105 to the terminal station as an electromagnetic wave.

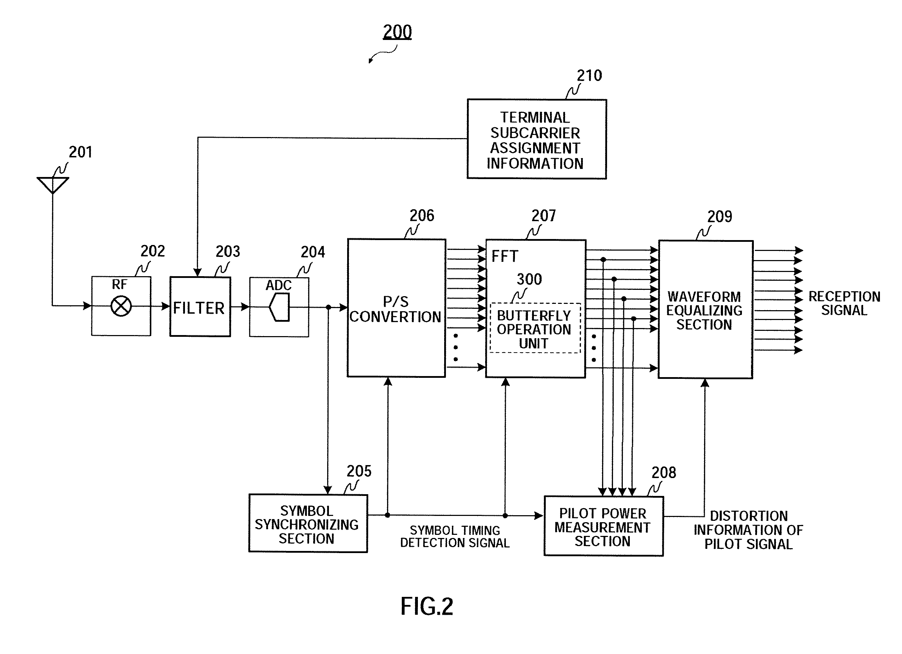

FIG. 2 shows the configuration of the terminal station of the OFDM communication apparatus according to Embodiment 1 of the present invention.

In FIG. 2, terminal station 200 includes receiving antenna 201, RF receiving section 202, filter 203, analog-digital converting section (referred to as "A/D converting section") 204, symbol timing synchronizing section 205, parallel-serial converting section (referred to as "P/S converting section") 206, FFT section 207, pilot power measurement section 208 and waveform equalizing section 209. Furthermore, terminal station 200 includes terminal subcarrier assignment information storing section 210 that stores terminal subcarrier data assigned by base station 100.

Receiving antenna 201 receives the OFDM modulated signal frombase station 100 and outputs the signal toRFreceiving section 202.

RF receiving section 202 receives the OFDM modulated signal from base station 100 via receiving antenna 201, performs predetermined radio signal processing (such as down-conversion and automatic gain control (AGC)) on the OFDM modulated signal and then performs frequency conversion to convert the OFDM modulated signal into a baseband signal.

Filter 203 performs band limitation on the OFDM modulated signal from RF receiving section 202 to which sampling data arranged in a forward direction with respect to a time axis is assigned based on the terminal subcarrier assignment information which is read out from terminal subcarrier assignment information storing section 210 and indicates subcarrier data assigned to terminal station 200 by base station 100, and thereby extracts frequency band required for receiving a signal in terminal station 200. In order to reduce a leakage carrier from band near communication band to which the terminal is assigned, filter 203 limits a subcarrier of the band near the communication band of the terminal out of signals from RF receiving section 202 based on the terminal subcarrier assignment information and sets nulls (a signal level is zero). A function of filter 203 can be realized by adaptively changing the number of taps and filter coefficients of an adjacent band limitation filter.

A/D converting section 204 performs A/D conversion processing on the OFDM modulated signal from filter 203 and converts the received signal into a digital signal. The converted digital signal is outputted to symbol timing synchronizing section 205 and P/S converting section 206.

Symbol timing synchronizing section 205 detects a timing of an effective symbol period included in the signal from A/D converting section 204 and generates a symbol timing detection signal. The generated symbol timing detection signal is outputted to P/S converting section 206, FFT section 207 and pilot power measurement section 208. Detection of the timing of the effective symbol period is performed by detecting a timing of the guard intervals inserted in the signal, for example.

P/S converting section 206 converts the signal from A/D converting section 204 into one time-series signal according to the symbol timing detection signal from symbol timing synchronizing section 205.

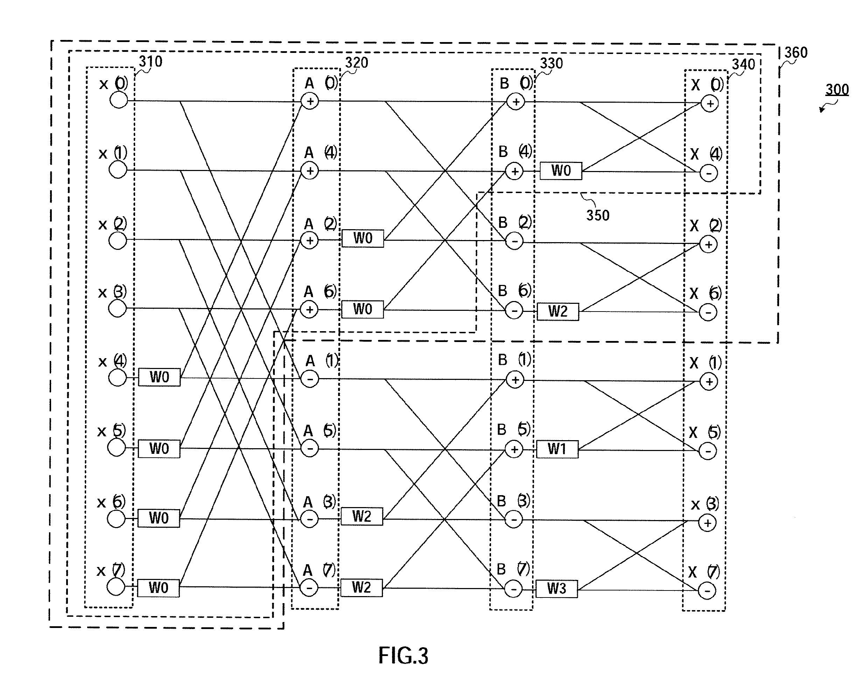

FFT section 207 includes butterfly operation unit 300 that performs butterfly operation for extracting subcarrier data from the signal inputted from P/S converting section 206. FFT section 207 performs fast Fourier transformation processing on the signal from P/S converting section 206 and converts the signal into a signal in the frequency domain according to the symbol timing detection signal from symbol timing synchronizing section 205. Through this fast Fourier transformation processing, the OFDM modulated signal transmitted from base station 100 is converted into a reception signal for each subcarrier, and the subcarrier data assigned to terminal station 200 is extracted. At this time, FFT section 207 activates a butterfly operation circuit which is minimum required to extract the subcarrier data assigned to terminal station 200 by base station 100 out of butterfly operation unit 300 and performs fast Fourier transformation processing. The fast Fourier transformation processing in FFT section 207 is described in detail with reference to FIG. 3 to FIG. 5.

Pilot power measurement section 208 measures an electric power of the pilot signal embedded in a known signal arrangement for each subcarrier data extracted at FFT section 207 with reference to the symbol timing detection signal from symbol timing synchronizing section 205 and generates distortion information of the pilot signal. The generated distortion information of the pilot signal is outputted to waveform equalizing section 209.

Waveform equalizing section 209 corrects amplitude and phase distortion per subcarrier of the OFDM signal that is caused by multipath disturbance generated on a transmission path using the distortion information of the pilot signal from pilot power measurement section 208.

Hereinafter, the operation of base station 100 and terminal station 200 of the OFDM communication apparatus configured as described above will be explained in detail. One base station and a plurality of terminal stations are connected using a multiple access technique. The operation of one terminal station out of a plurality of terminal stations which are connected using the multiple access technique is explained here.

Base station 100 assigns the sampling data arranged in a forward direction with respect to a time axis to a transmission signal including data to be provided to a plurality of terminal stations as specific subcarrier data, performs OFDM modulation processing and various kinds of radio signal processing, and transmits the processed signal to terminal station 200.

Specifically, first, S/P converting section 101 parallelizes transmission signals which are data symbols for serial transmission to which subcarriers are assigned and which also include data to be transmitted to a plurality of terminal stations according to terminal subcarrier assignment information and the pilot signal whose symbol information to be transmitted is known and obtains a plurality of sequences of data signals. By this means, the transmission signal is converted into a digital signal. As described above, the terminal subcarrier assignment information is information indicating a correspondence relation between subcarrier data included in the transmission signal and the terminal station to which the subcarrier data is assigned.

Next, IFFT section 102 performs inverse fast Fourier transformation processing on the signal from S/P converting section 101 and converts the signal into a time domain signal. The transmission signal to terminal station 200 is subjected to frequency division multiplexing and OFDM modulation through processing of S/P converting section 101 and IFFT section 102.

GI insertion section 103 inserts guard intervals to the OFDM modulated signal from IFFT section 102, for example, by inserting a cycle prefix and also performs windowing processing so as to make rising and falling of the OFDM symbol smooth. The OFDM modulated signal to which the guard intervals are inserted is converted into an analog signal by D/A converting section 104.

Next, RF transmitting section 105 performs predetermined radio signal processing (such as filtering, vector modulation, up-conversion, transmission power control and amplification) on the OFDM modulated signal from D/A converting section 104, and the OFDM modulated signal after the radio signal processing is transmitted to terminal station 200 which is a communicating party of radio communication via transmitting antenna 106.

Meanwhile, terminal station 200 receives the OFDM modulated signal from base station 100, performs various kinds of radio signal processing and OFDM demodulation processing and extracts subcarrier data assigned to terminal station 200. At this time, FFT section 207 of terminal station 200 activates a butterfly operation circuit which is minimum required to extract the subcarrier data assigned to terminal station 200 by base station 100 and performs the fast Fourier transformation processing.

Specifically, first, RF receiving section 202 receives the OFDM modulated signal from base station 100 via receiving antenna 201, performs predetermined radio signal processing (such as down-conversion and automatic gain control) on the OFDM modulated signal, and then performs frequency conversion to convert the OFDM modulated signal into a baseband signal.

Filter 203 performs band limitation on the OFDM modulated signal from RF receiving section 202 based on the terminal subcarrier assignment information indicating subcarrier data assigned to terminal station 200 by base station 100 and extracts frequency band required for signal reception in terminal station 200. That is to say, in order to reduce a leakage carrier from band near communication band assigned to the terminal, filter 203 limits a subcarrier of the band near the communication band of the terminal out of signals from RF receiving section 202 based on the terminal subcarrier assignment information and sets nulls. The OFDM signal band-limited by filter 203 is converted into a digital signal in A/D converting section 204 and outputted to symbol timing synchronizing section 205 and P/S converting section 206.

Symbol timing synchronizing section 205 detects a timing of an effective symbol period included in the signal from A/D converting section 204 and generates a symbol timing detection signal. The generated symbol timing detection signal is outputted to P/S converting section 206, FFT section 207 and pilot power measurement section 208.

P/S converting section 206 converts the signal from A/D converting section 204 into one time-series signal according to the symbol timing detection signal from symbol timing synchronizing section 205.

FFT section 207 performs fast Fourier transformation on the signal from P/S converting section 206 and converts the signal into a frequency domain signal according to the symbol timing detection signal from symbol timing synchronizing section 205. Through this fast Fourier transformation processing, the OFDM modulated signal transmitted from base station 100 is converted into a reception signal for each subcarrier, and the subcarrier data assigned to terminal station 200 is extracted as sampling data arranged in a forward direction with respect to a time axis as specific subcarrier data. At this time, FFT section 207 activates a butterfly operation circuit which is minimum required to extract the subcarrier data assigned to terminal station 200 by base station 100 out of butterflyoperationunit 300 and performs fast Fourier transformation processing.

Pilot power measurement section 208 measures an electric power of the pilot signal embedded in a known signal arrangement for each subcarrier data extracted in FFT section 207 and generates distortion information of the pilot signal. The generated distortion information of the pilot signal is outputtedtowaveform equalizing section 209.

Waveform equalizing section 209 corrects amplitude and phase distortion per subcarrier of the OFDM signal that is caused by multipath disturbance generated on a transmission path using the distortion information of the pilot signal from pilot power measurement section 208.

Next, fast Fourier transformation of the OFDM signal by FFT section 207 of terminal station 200 will be explained using FIG. 3.

FIG. 3 shows a configuration of the butterfly operation unit of FFT section according to Embodiment 1 of the present invention. An example of FIG. 3 shows a signal flowof the butterfly operation for the case where eight subcarrier data are obtained from eight points of the sampling data of an OFDM time waveform.

In FIG. 3, butterfly operation unit 300 includes input terminal 310 to which sampling data x(0) to x(7) are inputted, first node 320 configured with eight intermediate nodes A(0) to A(7), second node 330 which is provided at a following stage of first node 320 and configured with eight intermediate nodes B (0) to B(7), output terminal 340 which is provided at a following stage of second node 330 and outputs subcarrier data X(0) to X(7) that are output of the butterfly operation, and rotation factors W0 to W3 for complex operation.

Input terminal 310 is a terminal for inputting eight points of sampling data x (0) to x (7) as an input signal sequence obtained from the OFDM time waveform. Sampling data x(0) to x (7) inputted to input terminal 310 have been rearranged in a forward direction with respect to a time axis by a rearranging section (not shown) . The rearranging section can be configured with a buffer that temporarily stores sampling data x(0) to x (7) and a control circuit that reads out data from the buffer in order of the time axis.

First node 320 divides the eight points of the sampling data x(0) to x(7) inputted to input terminal 310 into two-- upper sampling data x(0) to x(3) and lower sampling data x(4) to x(7) of the sampling data arranged in a forward direction with respect to the time axis--, and performs butterfly operation in which upper sampling data x (0) to x (3) and data obtained by multiplying lower sampling data x (4) to x (7) by rotation factor W0 are added, and the data obtained by multiplying lower sampling data x(4) to x(7) by rotation factor W0 is subtracted from upper sampling data x(0) to x(3).

That is to say, first node 320 performs butterfly operation in which the data obtained by multiplying the other sampling data x (4) to x (7) by rotation factor W0 is added to or subtracted from one sampling data x(0) to x(3). For example, intermediate node A(0) performs butterfly operation indicated in the following equation (1), and intermediate node A(7) performs butterfly operation indicated in the following equation (2).

$$A(0) = x(0) + W0 \cdot x(4) \cdots (1)$$

$$A(7) = x(3) - W0 \cdot x(7) \cdots (2)$$

Upper nodes B (0), B (4), B (2), B (6) in second node 330 divide data operated at upper nodes A(0), A(4), A (2), A(6) in first node 320 into two--upper data and lower data--, and perform butterfly operation in which the upper data and the data obtained by multiplying the lower data by rotation factor W0 are added, and the data obtained by multiplying the lower data by rotation factor W0 is subtracted from the upper data. Similarly, lower nodes B(1), B(5), B(3), B(7) of second node 330 divide data operated at lower nodes A(1), A(5), A(3), A(7) in first node 320 into two--upper data and lower data--, and perform butterfly operation in which the upper data and the data obtained by multiplying the lower data by rotation factor W2 are added, and the data obtained by multiplying the lower data by rotation factor W2 is subtracted from the upper data.

That is to say, the upper nodes and the lower nodes in second node 330 respectively perform butterfly operation in which one data and the data obtained by multiplying the other data by rotation factor W0 or W2 are added, or the data obtained by multiplying the other data by rotation factor W0 or W2 is subtracted from one data. For example, intermediate node B(0) performs butterfly operation indicated in the following equation (3) and intermediate node B(7) performs butterfly operation indicated in the following equation (4), respectively.

$$B(0) = A(0) + W0 \cdot A(2) = \{x(0) + W0 \cdot x(4)\} + W0 \cdot \{x(2) + W0 \cdot x(6)\} \cdots (3)$$

$$B(7) = A(5) - W2 \cdot A(7) = \{x(1) - W0 \cdot x(5)\} - W2 \cdot \{x(3) - W0 \cdot x(7)\} \cdots (4)$$

Above-described first node 320 and second node 330 have a following property as an intermediate node.

First, the number of intermediate nodes equivalent to the number of data to be inputted/outputted from/to these terminals are provided between the input terminal and the output terminal. In the example of FIG. 3, the number of sampling data inputted to input terminal 310 and the number of the subcarrier data outputted from output terminal 340 are $2^3=8$, and therefore the number of provided intermediate nodes is two, that is, first node 320 and second node 330.

Secondly, when a plurality of intermediate nodes are provided, upper nodes of the intermediate node at a following stage receive data operated by upper nodes of the intermediate node at a preceding stage, and lower nodes of the intermediate node at the following stage receive data operated by lower nodes of the intermediate node at the preceding stage. Therefore, data operated by the upper nodes of the intermediate node at the preceding stage is never inputted to the lower nodes of the intermediate node at the following stage and data operated by the lower nodes of the intermediate node at the preceding stage is never inputted to the upper nodes of the intermediate node at the following stage.

Thus, until an upper node and a lower node make a one-to-one pair bypassing certain number of stages of the intermediate nodes, the above-described combining processing is repeated. That is, an intermediate node at a last stage is made up of combinations of the one-to-one pair of the upper node and the lower node.

Output terminal 340 is provided at the following stage of second node 330 and provided with a plurality of butterfly operation sections that perform butterfly operation in which data obtained by multiplying data operated at the lower node by one of rotation factors W0 to W3 is added to or subtracted from data operated at the upper node, out of one-to-one pairs of the upper nodes and the lower nodes configuring second node 330. Through this butterfly operation, subcarrier data X(0), X(4), ···, X(3), X(7) that are obtained using eight points of sampling data x(0) to x (7) inputted to input terminal 310 is generated and outputted. The alignment order of eight data X(0), X(4), ···, X(3), X(7) outputted from output terminal 340 is a bit-reversal order described later.

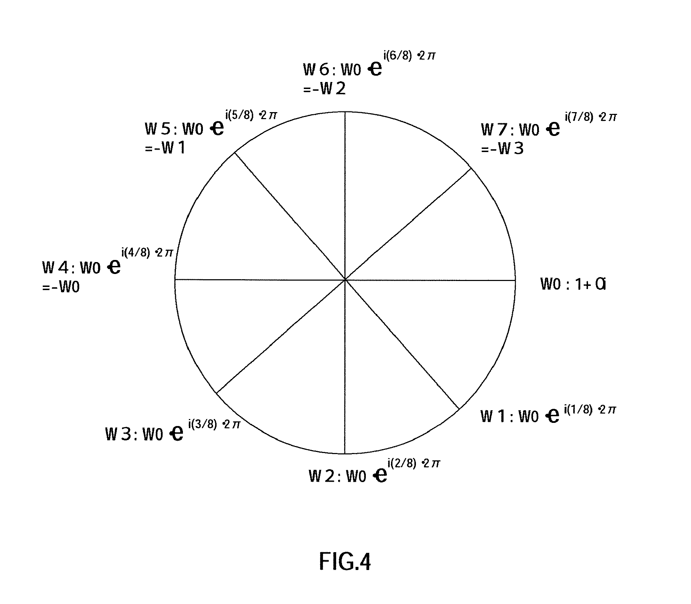

Next, "rotation factor" that is indicated with W0, W1, W2, W3 in FIG. 3 will be described using FIG. 4.

FIG. 4 describes a rotation factor in butterfly operation for the case where the number of points of sampling data is eight.

FIG. 4 shows a circle on a complex plane whose radius is one and which is divided into eight equally sized partitions (the number of sampling points of the OFDM signal waveform). Rotation factor WK can be obtained by the following equation (5).

$$WK = \exp[-i(2\pi/8)K] \quad (K = 0, 1, \cdots, 7) \cdots (5)$$

Rotation factor WK has the following characteristics as a basic characteristic on the complex plane.

[1] periodicity W[K±8] = W[K] return to an original position after going around a circle (2π)
[2] symmetrical property W[K±8/2] = -W[K] sign is reversed after going half around a circle (π)

From the above characteristic [2], as shown in FIG. 3, by reversing a sign of complex addition performed in butterfly operation unit 300, it is possible to explain operation of butterfly operation unit 300 using only four rotation factors (W0, W1, W2, W3) out of eight rotation factors (W0, W1, ..., W7).

For example, data operated in A(7) can be expressed by the following equation (6) using rotation factor W4.

$$A(7) = x(3) + W(4) \cdot x(7) \cdots (6)$$

Here, from the above characteristic [2], W4 = -W0 is true, A(7) can be expressed by the equation (2), and the equation (2) is equivalent to the equation (6) . In a similar way, a sign of the complex addition is reversed. In this embodiment, it is possible to perform butterfly operation using four rotation factors (W0, W1, W2, W3).

Hereinafter, operation of butterfly operation unit 300 configured as described above will be explained in detail.

Initially, basic operation of butterfly operation unit 300 applied to the present invention will be described.

First, the eight points of sampling data x (0) to x (7) which are input signal sequences obtained from a time waveform of the OFDM signal inputted to FFT section 207 are inputted to input terminal 310. The sampling data inputted to input terminal 310 have been rearranged in a forward direction with respect to the time axis by the rearranging section.

Next, first node 320 performs butterfly operation in which the data obtained by multiplying lower part x (4) to x (7) by rotation factor W0 is added to or subtracted from upper part x(0) to x(3) of the eight points of sampling data x(0) to x(7) inputted to input terminal 310. The data operated at upper nodes A(0), A(4), A(2), A(6) in first node 320 are inputted to upper nodes B(0), B(4), B(2), B(6) in second node 330 and the data operated at lower nodes A(1), A(5), A (3), A(7) in first node 320 are inputted to lower nodes B(1), B(5), B(3), B(7) in second node 330.

Next, the upper nodes and the lower nodes in second node 330 perform butterfly operation in which one data and the data obtained by multiplying the other data by rotation factor W0 or W2 are added, or the data obtained by multiplying the other data by rotation factor W0 or W2 is subtracted from one data. Here, second node 330 is made up of combinations of a one-to-one pair of the upper node and the lower node such as B(0) and B(4), B(2) and B(6), B(1) and B(5), and B(3) and B(7).

Last, a butterfly operation section of output terminal 340 performs butterfly operation with respect to each combination of the one-to-one node pair of the upper node and the lower node configuring second node 330, in which data obtained by multiplying the data operated at the lower node by one of rotation factors W0 to W3 is added to or subtracted from the data operated at the upper node. Through this butterfly operation, subcarrier data X(0), X(4), ···, X(3), X(7) that are obtained using the eight points of sampling data x(0) to x(7) inputted to input terminal 310 is generated and outputted from output terminal 340. The alignment order of eight data X(0), X(4), ···, X(3), X(7) outputted from output terminal 340 is a bit-reversal order.

In other words, the butterfly operation in butterfly operation unit 300 is performed as described below.

First, sampling data sequences x(0) to x(7) are divided into two--data sequences of even number and data sequences of odd number--, and the following sequence (1) and sequence (2) are obtained.

$$\text{data sequences of even number } \{x(0), x(2), x(4), x(6)\} \cdots \text{ sequence } (1)$$

$$\text{data sequences of odd number } \{x(1), x(3), x(5), x(7)\} \cdots \text{ sequence } (2)$$

Next, the sequence (1) and the sequence (2) are divided into two--data sequences of odd number and data sequences of even number--, respectively, and the following sequence (3) to sequence (6) are obtained.

$$\{x(0), x(4)\} \cdots \text{ sequence } (3)$$

$$\{x(2), x(6)\} \cdots \text{ sequence } (4)$$

$$\{x(1), x(5)\} \cdots \text{ sequence } (5)$$

$$\{x(3), x(7)\} \cdots \text{ sequence } (6)$$

The butterfly operation is performed by repeating discrete Fourier transformation of two sampling data as represented by the sequence (3) to the sequence (6) . For example, the discrete Fourier transformation of the sequence (4) is provided with data operated by A(2) and A(3), that is, by the following equation (7) and equation (8).

$$A(2) = x(2) + W0 \cdot x(6) \cdots (7)$$

$$A(3) = x(2) - W0 \cdot x(6) \cdots (8)$$

Additionally, the discrete Fourier transformation of the sequence (5) is provided with data operated by A(4) and A(5), that is, by the following equation (9) and equation (10).

$$A(4) = x(1) + W0 \cdot x(5) \cdots (9)$$

$$A(5) = x(1) - W0 \cdot x(5) \cdots (10)$$

The discrete Fourier transformation is performed for each data sequence which is obtained by discrete Fourier transformation described above and operated in first node 320. The discrete Fourier transformation is similarly performed for each data sequence which is operated in second node 330, and subcarrier data is obtained.

As described above, sampling data is divided into two--data sequences of odd number and data sequences of even number. The obtained data sequences are divided into two again--data sequences of odd number and data sequences of even number. This operation is repeated until a data sequence whose number of elements is two is finally obtained, and the operation of discrete Fourier transformation for two data is repeated.

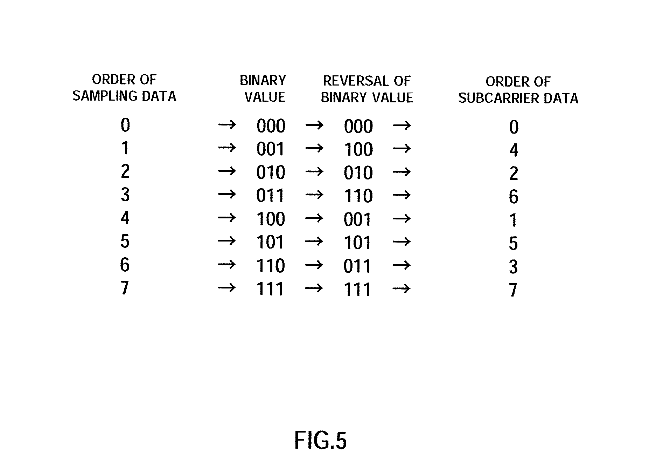

Meanwhile, there is a fixed relationship, called "bit reversal", between the alignment order of sampling data of the OFDM signal x(0) to x(7) and the alignment order of subcarrier data obtained using this sampling data X(0) to X(7). This relationship will be explained using FIG. 5.

FIG. 5 shows a relationship between sampling data of the OFDM signal and subcarrier data obtained using the sampling data in the butterfly operation for the case where the number of points of the sampling data is eight.

In FIG. 5, first, the order of the sampling data is expressed in binary. Next, by reversing bits of the order of the sampling data indicated in binary and converting bit-reversed binary values into decimal values, the order of the subcarriers can be obtained. The "bit reversal" indicates a relationship between the order of the sampling data and the order of the subcarrier data for the case where the order of the sampling data is indicated in binary and the order from theMSB (Most Significant Bit) is reversed to the order from the LSB (Least Significant Bit).

For example, when the order of the sampling data is "1", it is indicated as "001" in binary. When bits are reversed by switching between left and right of the orders of MSB and LSB of "001", "100" is obtained. When this "100" is indicated with a decimal value corresponding to a binary format of the sampling data, the order "4" of the subcarrier data is obtained which corresponds to the order "1" of the sampling data. Accordingly, a relationship between x(1) and X(4) is bit reversal. Similarly, relationships between x (3) and X(6), x(4) and X(1), and x(6) and X(3) are bit reversal.

Thus, in the butterfly operation, complex multiplication and complex addition are repeated so that a relationship between the order of the sampling data and the order of subcarrier data obtained using the sampling data becomes bit reversal, and thus subcarrier data is obtained.

The inventor focused on regularity of operation upon butterfly operation described above and conceived of the present invention.

By focusing on subcarrier data arranged in a bit-reversal order, the following fact is known. Namely, when a pair of subcarrier data is focused on out of subcarrier data arranged in a bit-reversal order outputted from output terminal 340, in order to obtain only a pair of subcarrier data that is a final output, it is only necessary to perform a part of operation out of operation circuits in butterfly operation unit 300.

For example, it is only necessary to perform butterfly operation of a part bordered by dashed line 350 in FIG. 3 in order to obtain only X(0) and X(4). That is to say, abutterflyoperation section required for calculating subcarrier data of X(0) and X(4) is only a part bordered by dashed line 350. Even if butterfly operation of the part other than the part bordered by dashed line 350 is omitted, there is no influence on obtaining the subcarrier data. More specifically, X(0) and X(4) can be obtained even if A(1), A(5), A(3), A(7) in first node 320, B(2), B(6), B(1), B(5), B(3), B(7) in second node 330, and butterfly operation for obtaining subcarrier data X(2), X(6), X(1), X(5), X(3), X(7) are omitted.

When the number of points of sampling data is eight, twenty four times of complex multiplication and twenty four times of complex addition is needed in order to perform all the operation in butterfly operation unit 300 in FIG. 3. On the other hand, butterfly operation of a part bordered by dashed line 350 is performed with fourteen times of complex multiplication and eight times of complex addition, so that it is possible to omit ten times of complex multiplication and sixteen times of complex addition. By omitting the butterfly operation, a power consumed in FFT operation can be largely reduced.

The omission of operation in the butterfly operation described above is not limited to the case of obtaining only X(0) and X(4), and can be also applied to a case of obtaining only X(2) and X(6), a case of obtaining only X(1) and X(5), and a case of obtaining only X(3) and X(7).

Furthermore, in order to obtain only X(0), X(4), X(2), X(6), it is only necessary to perform butterfly operation of a part bordered by dashed line 360. That is, a butterfly operation section required for calculating subcarrier data of X(0), X(4), X(2), X(6) is only a part bordered by dashed line 360. Even if butterfly operation of a part other than the part bordered by dashed line 360 is omitted, there is no influence on obtaining these subcarrier data. In this case, the butterfly operation of a part bordered by dashed line 360 is performed with sixteen times of complex multiplication and twelve times of complex addition, so that it is possible to omit eight times of complex multiplication and twelve times of complex addition. This example can be similarly applied to a case of obtaining only X(1), X(5), X(3), X(7).

By using this principle, unnecessary butterfly operation performed in butterfly operation unit 300 of FFT section 207 is omitted. In this embodiment, base station 100 divides eight subcarrier data arranged in a bit-reversal order into two, four or eight sections and assigns the each sectioned subcarrier data to each terminal station. On the other hand, terminal station 200 extracts specific subcarrier data assigned by base station 100 from at least one of output terminal 340 of butterfly operation unit 300. Namely, in FFT section 207 of terminal station 200, butterfly operation unit 300 only performs butterfly operation for extracting the subcarrier data assigned by base station 100 and omits other butterfly operation.

For example, when the base station and four terminal stations are connected using a multiple access technique, as a method of assigning subcarriers when the base station assigns two subcarrier data to four terminal stations respectively and transmits a signal, the subcarrier data is assigned so that terminal station 1 extracts a combination of X(0) and X(4), terminal station 2 extracts a combination of X(2) and X(6), terminal station 3 extracts a combination of X(1) and X(5), and terminal station 4 extracts a combination of X(3) and X(7). Thereby, each terminal station performs only butterfly operation required for extracting two subcarrier data which is assigned by the base station and is adjacent to each other, and omits other butterfly operation, so that a power consumed by FFT operation is reduced.

Similarly, when the base station and two terminal stations are connected using a multiple access technique, when the base station assigns four subcarrier data to two terminal stations respectively and transmits a signal, the subcarrier data is assigned so that, for example, terminal station 1 extracts a combination of X(0), X(4), X(2), X(6), terminal station 2 extracts a combination of X(1), X(5), X(3), X(7). Thereby, each terminal station performs only butterfly operation required for extracting four subcarrier data which is assigned by the base station and is adjacent to each other, and omits other butterfly operation, so that a power consumed by FFT operation is reduced.

Additionally, when the base station and three terminal stations are connected using a multiple access technique, the subcarrier data is assigned so that for example, terminal station 1 extracts a combination of X(0), X(4), X(2), X(6), terminal station 2 extracts a combination of X(1), X(5), and terminal station 3 extracts a combination of X(3), X(7). Thereby, terminal station 1 performs only butterfly operation required for extracting four subcarrier data which is assigned by the base station and is adjacent to each other, terminal station 2 and terminal station 3 perform only butterfly operation required for extracting two subcarrier data which is assigned by the base station and is adjacent each other, and the other butterfly operation is omitted, so that a power consumed by FFT operation is reduced.

In addition, it is not necessary to assign subcarrier data from the base station to the terminal stations per power of two (2, 4 or 8 in this embodiment). It is also possible to assign subcarrier data of the number other than the power of two to a specific terminal station. However, when the subcarrier data is assigned in this manner, it is preferable to prevent influence of the omission of the butterfly operation on other terminal stations. Namely, when a part of subcarrier data that is sectioned per power of two is assigned to a specific terminal station, the unused subcarrier data in the segment is prevented from being assigned to other terminal stations.

For example, when the base station and four terminal stations are connected using a multiple access technique, X (0) is assigned to terminal station 1, X(2), X(6) are assigned to terminal station 2, X(5) is assigned to terminal station 3, and X(3), X(7) are assigned to terminal station 4. Also, when the base station and two terminal stations are connected using a multiple access technique, X(0), X(2), X(6) are assigned to terminal station 1, and X(5), X(3), X(7) are assigned to terminal station 2. In these examples, X(4), X(1) are subcarrier data that are not assigned to any terminal station.

Additionally, it is preferable that segments to which subcarrier data for terminal stations from the base station is assigned and which are adj acent to each other, are further adj acent to other segments.

For example, when the base station and two terminal stations are connected using a multiple access technique, it is possible to reduce more operation amount in the butterfly operation unit of terminal station 1 and terminal station 2 in the case where terminal station 1 extracts a combination of X(0), X(4), X(2), X(6), and terminal station 2 extracts a combination of X(1), X(5), X(3), X(7) than the case where terminal station 1 extracts a combination of X(0), X(4), X(1), X(5), and terminal station 2 extracts a combination of X(2), X(6), X(3), X(7).

By this means, terminal station 1 and terminal station 2 in the latter case can omit four times of complex multiplication and four times of complex addition compared to terminal 1 and terminal 2 in the former case.

In short, it is preferable for base station 100 to assign subcarrier data so that each subcarrier data is extracted from butterfly operation sections whose output terminals are adjacent to each other in each terminal station 200. When the subcarrier data is extracted from three or more butterfly operation sections, it is preferable that the butterfly operation sections which are adjacent to each other are further adjacent to other sections. Here, the butterfly operation sections whose output terminals are adjacent to each other are a combination of a pair of butterfly operation sections that outputs the above-described subcarrier data. By this means, each terminal station can omit butterfly operation for efficiently extracting subcarrier data assigned by the base station.

As described above in detail, according to this embodiment, base station 100 includes an assigning section that assigns sampling data arranged in a forward direction with respect to a time axis to terminal station 200 as specific subcarrier data. Terminal station 200 includes: input terminal 310 that inputs a first and a second data sequences as sampling data; first node 320 that performs butterfly operation in which a data sequence obtained by multiplying the first data sequence by a complex operation factor is added to or subtracted from the second data sequence; second node 330 to which an output of first node 320 after divided into two is inputted and that performs butterfly operation in which, with respect to each output divided into two, one data sequence multiplied by the complex operation factor is added to or subtracted from the other data sequence; and output terminal 340 that includes a plurality of butterfly operation sections that are provided at an output side of second node 330 and performs butterfly operation in which one data sequence multiplied by the complex operation factor is added to or subtracted from the other data sequence. Terminal station 200 receives sampling data from base station 100 arranged in a forward direction with respect to a time axis and extracts specific subcarrier data from at least one of the plurality of butterfly operation sections in output terminal 340, so that the terminal station can activate only butterfly operation sections required for extracting the specific subcarrier data out of intermediate nodes and the plurality of butterfly operation sections in the output terminal and stop operation of the other butterfly operation sections. Thereby, it is possible to remarkably reduce power consumption of FFT operation and efficiently use a battery of each terminal station.

Additionally, butterfly operation required for the terminal is performed as is conventionally performed, and therefore accuracy of the FFT operation does not deteriorate.

Here, it is possible to readily stop the operation of the butterfly operation sections by turning on/off a switch of butterfly operation unit 300 in FFT section 207.

Additionally, the present invention can be realized without largely modifying an existing system, so that it has advantages of low cost and easy installation.

In addition, in the above-described embodiment, the case has been described where the butterfly operation section is configured with hardware, but the butterfly operation section can be realized with software. In this case, by stopping the operation of a part of the butterfly operation sections, it is possible to reduce the number of operation steps and obtain advantages of shortening of operation execution time and reduction of power consumption.

(Embodiment 2)

Embodiment 2 is a case where sixteen subcarrier data are obtained from sixteen points of sampling data in Embodiment 1. A terminal station of this embodiment has a different configuration and operation of a butterfly operation unit of FFT section 207 from that of terminal station 200 of Embodiment 1. The configuration and operation of other part in the base station and the terminal station are the same as that of base station 100 and terminal station 200 of Embodiment 1. Therefore, explanation thereof will be omitted.

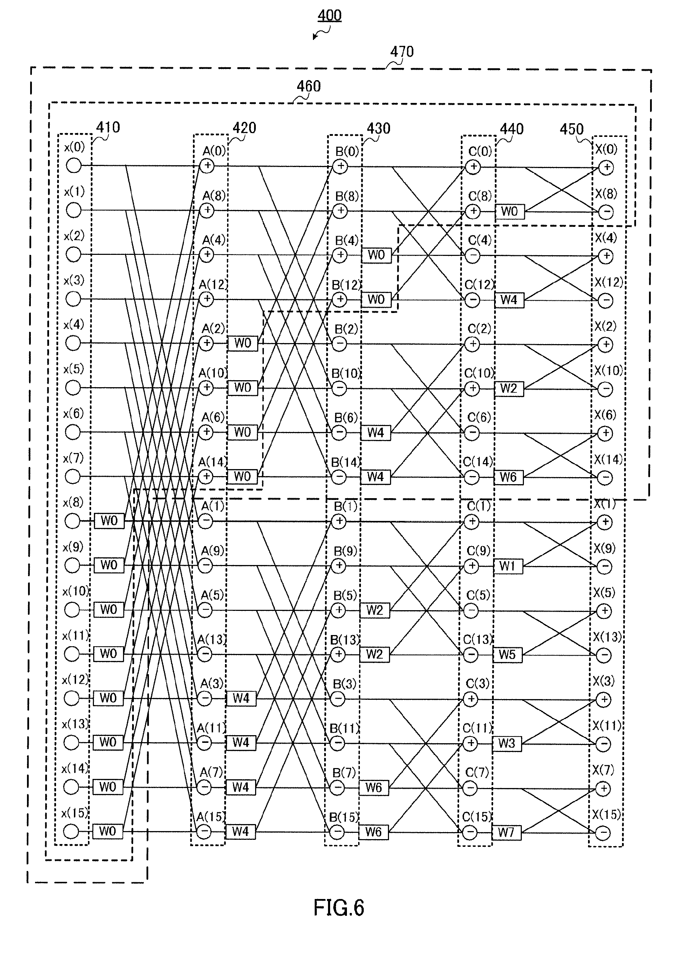

Fast Fourier transformation of an OFDM signal performed by FFT section 207 of this embodiment will be described using FIG. 6.

FIG. 6 shows a configuration of the butterfly operation unit of the FFT section according to Embodiment 2 of the present invention. The example of FIG. 6 shows a signal flow of the butterfly operation for a case where sixteen subcarrier data are obtained from sixteen points of sampling data of an OFDM signal waveform.

In FIG. 6, butterfly operation unit 400 includes input terminal 410 to which sampling data x(0) to x(15) are inputted, first node 420 configured with sixteen intermediate nodes A(0) to A(15), second node 430 that is provided at a following stage of first node 420 and configured with sixteen intermediate nodes B(0) to B(15), third node 440 that is provided at a following stage of second node 430 and configured with sixteen intermediate nodes C(0) to C(15), output terminal 450 that outputs subcarrier data X(0) to X(15) that are butterfly operation outputs, and rotation factors W0 to W7 for complex operation.

Input terminal 410 is a terminal to which sixteen points of sampling data x(0) to x(15) are inputted as an input signal sequence obtained from a time waveform of an OFDM signal. The alignment order of sampling data x (0) to x (15) inputted to input terminal 410 has been rearranged in a forward direction with respect to a time axis by the rearranging section.

First node 420 divides sixteen points of sampling data x (0) to x (15) inputted to input terminal 410 into two-- upper sampling data x(0) to x(7) and lower sampling data x(8) to x(15) of the sampling data arranged in a forward direction with respect to a time axis--, and performs butterfly operation in which upper sampling data x (0) to x (7) and data obtained by multiplying lower sampling data x (8) to x(15) by rotation factor W0 are added, and data obtained by multiplying lower sampling data x(8) to x(15) by rotation factor W0 is subtracted from upper sampling data x (0) to x (7) .

Namely, first node 420 performs butterfly operation in which the data obtained by multiplying sampling data x (8) to x(15) by rotation factor W0 is added to or subtracted from sampling data x(0) to x(7). For example, intermediate node A(0) performs butterfly operation indicated in the following equation (11).

$$A(0) \ = \ x(0) \ + \ W0 \cdot x(8) \ \cdots \ (11)$$

Upper nodes B(0), B(8), B(4), B(12), B(2), B(10), B(6), B (14) of second node 430 divide data operated at upper nodes A(0), A(8), A(4), A(12), A(2), A(10), A(6), A(14) of first node 420 into two--upper data and lower data--, and perform butterfly operation in which the upper data and data obtained by multiplying the lower data by rotation factor W0 are added, and the data obtained by multiplying the lower data by rotation factor W0 is subtracted from the upper data. Lower nodes B(1), B(9), B(5), B(13), B(3), B(11), B(7), B (15) of second node also perform similar operation for data operated by the lower nodes of first node 420.

Namely, the upper nodes and the lower nodes of second node 430 perform butterfly operation in which one data and data obtained by multiplying the other data by rotation factor W0 or W4 are added or the data obtained by multiplying the other data by rotation factor W0 or W4 is subtracted from one data. For example, intermediate node B (0) performs butterfly operation indicated in the following equation (12).

$$
\begin{aligned}
B(0) &= A(0) + W0 \cdot A(2) \\
&= \{x(0) + W0 \cdot x(8)\} + W0 \cdot \{x(4) + W0 \cdot x(12)\} \\
&= x(0) + W0 \cdot \{x(4) + x(8)\} + W0^2 \cdot x(12) \cdots (12)
\end{aligned}
$$

Upper nodes C (0), C (8), C (4), C(12) out of upper nodes C(0), C(8), C(4), C(12), C(2), C(10), C(6), C(14) of third node 440 divide data operated at upper nodes B(0), B(8), B(4), B(12) out of upper nodes B(0), B(8), B(4), B(12), B(2), B(10), B(6), B(14) of second node 430 into two--upper data and lower data--, and perform butterfly operation in which the upper data and data obtained by multiplying the lower data by rotation factor W0 are added, and data obtained by multiplying the lower data by rotation factor W0 is subtracted from the upper data. Other nodes C(2), C(10), C(6), C (14), C(1), C(9), C(5), C(13), C(3), C(11), C(7), C(15) of third node 440 perform similar operation.

Namely, upper nodes out of the upper nodes, lower nodes out of the upper nodes, upper nodes out of the lower nodes and lower nodes out of the lower nodes of third node 440 perform butterfly operation in which one data and data obtained by multiplying the other data by one of rotation factors W0, W2, W4, W6 are added or the data obtained by multiplying the other data by one of rotation factors W0, W2, W4, W6 is subtracted from one data. For example, intermediate node C (0) performs butterfly operation indicated in the following equation (13).

$$
\begin{aligned}
C(0) &= B(0) + W0 \cdot B(4) \\
&= \{x(4) + W0 \cdot x(12)\} + W0 \cdot \{A(4) + W0 \cdot A(6)\} \\
&= x(4) + W0 \cdot \{x(2) + x(12)\} + W0^2 \cdot \{x(6) + x(10)\} \\
&\quad + W0^3 \cdot x(4) \cdots (13)
\end{aligned}
$$

Output terminal 450 includes a plurality of butterfly operation sections which are provided at a following stage of third node 440 and perform butterfly operation in which data obtained by multiplying data operated at the lower node by one of rotation factors W0 to W7 is added to or subtracted from data operated at the upper node, out of combinations of a one-to-one pair of the upper node and the lower node configuring third node 440. Through the butterfly operation, subcarrier data X(0), X(8), ⋯, X(7), X(15) obtained using sixteen points of sampling data x(0) to x(15) inputted to input terminal 410 is generated and outputted. The alignment order of sixteen data X(0), X(8), ⋯, X(7), X(15) outputted from output terminal 450 is bit-reversal described later.

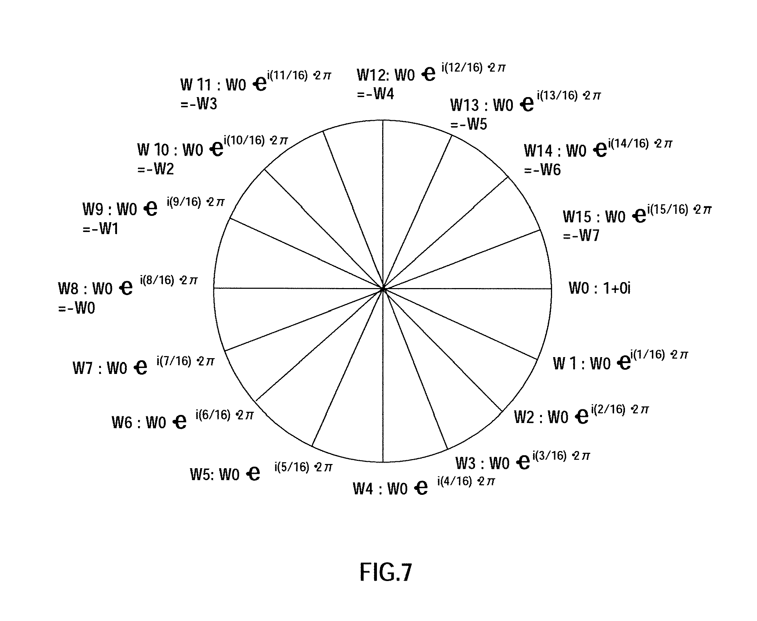

Next, "rotation factor" indicated by W0 to W7 in FIG. 6 will be described using FIG. 7.

FIG. 7 describes the rotation factor in the butterfly operation for the case where the number of points of sampling data is sixteen.

FIG. 7 shows a circle on a complex plane whose radius is one and which is divided into sixteen equally sized partitions (the number of sampling points of an OFDM signal waveform). Rotation factor WK is obtained by the following equation (14).

$$
WK = \exp[-i(2\pi/16)K] \quad (K = 0, 1, \cdots, 15) \cdots (14)
$$

Rotation factor WK has the following basic characteristic on the complex plane.

[3] periodicity W[K±16] = W[K] return to an original position after going around a circle (2π)
[4] symmetrical property W[K±16/2] = -W[K] sign is reversed after going half around a circle (π)

Also in this embodiment, from the above characteristic [4], as shown in FIG. 6, by reversing a sign of complex addition that is performed in butterfly operation unit 400, it is possible to perform butterfly operation using eight rotation factors (W0, W2, ···, W7).

Hereinafter, the operation of butterfly operation unit 400 configured as described above will be explained in detail.

The basic operation of butterfly operation unit 400 applied to the present invention will be explained.

First, sixteen points of sampling data x(0) to x (15) which is an input/output signal sequences obtained from a time waveform of the OFDM signal inputted to FFT section 207 are inputted to input terminal 410. The sampling data inputted to input terminal 410 have been rearranged in a forward direction with respect to a time axis by the rearranging section.

Next, first node 420 performs butterfly operation in which data obtained by multiplying lower parts x (8) to x(15) by rotation factor W0 is added to or subtracted from upper parts x (0) to x (7) of sixteen points of sampling data x (0) to x (15) inputted to input terminal 410. The data operated at upper nodes A(0), A(8), A(4), A(12), A(2), A(10), A(6), A(14) of first node 420 are inputted to upper nodes B(0), B(8), B(4), B(12), B(2), B(10), B(6), B(14) of second node 430. The data operated at lower nodes A(1), A(9), A(5), A(13), A(3), A(11), A(7), A(15) of first node 420 are inputted to lower nodes B(1), B(9), B(5), B(13), B(3), B(11), B(7), B(15) of second node 430.

Next, in second node 430, the butterfly operation is performed based on each data outputted from first node 420 and rotation factors W0, W4. The data outputted from B(0), B(8), B(4), B(12) of second node 430 are inputted to C (0), C(8), C(4), C(12) of third node 440. Additionally, the data outputted from B(2), B(10), B(6), B(14) of second node 430 are inputted to C(2), C(10), C(6), C(14) of third node 440. Similarly, the data outputted from B(1), B(9), B(5), B(13) of second node 430 are inputted to C(1), C(9), C(5), C(13) of third node 440, and the data outputted from B(3), B(11), B(7), B(15) of second node 430 are inputted to C(3), C(11), C(7), C(15) of third node 440.

Next, in third node 440, the operation is performed based on each data outputted from second node 430 and rotation factors W0, W2, W4, W6. Here, third node 440 is configured with combinations of a one-to-one node pair of the upper node and the lower node, C(0) and C(8), C(4) and C(12), C(2) and C(10), C(6) and C(4), C(1) and C(9), C(5) and C(13), C(3) and C(11), and C(7) and C(15).

Finally, the butterfly operation section of output terminal 450 performs butterfly operation with respect to each combination of the one-to-one node pair of the upper node and the lower node included in third node 440, in which the data obtained by multiplying data operated in the lower node by one of rotation factors W0 to W7 is added to or subtracted from the data operated in the upper node. Through the butterfly operation, subcarrier data X(0), X(8), ···, X(7), X(15) obtained from sixteen points of sampling data x(0) to x(15) inputted to the input terminal 410 is generated and outputted from output terminal 450.

Also in this embodiment in which the number of points of sampling data is sixteen, a relationship between the alignment order of sampling data x(0) to x(15) of the OFDM signal and the alignment order of sub-carrier data X(0), X(8), ···, X(7), X(15) obtained using the sampling data is a bit-reversal order.

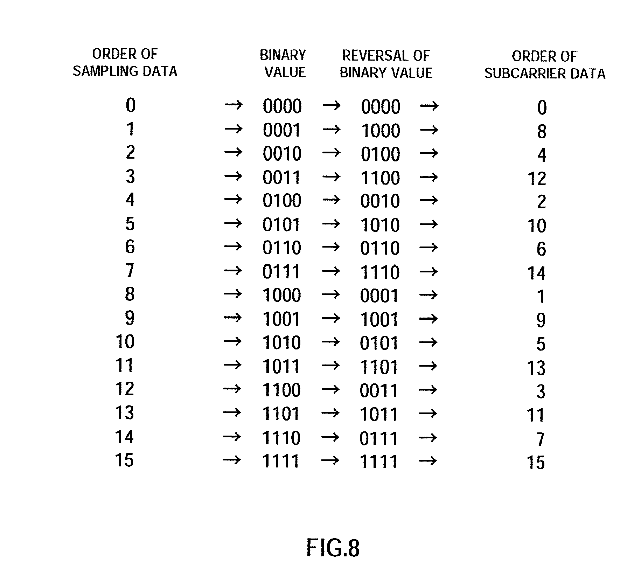

FIG. 8 shows a relationship between the sampling data of the OFDM signal and the subcarrier data obtained using the sampling data in the butterfly operation for the case where the number of points of sampling data is sixteen.

In FIG. 8, for example, when the order of sampling data is "1", it is indicated as "0001" in binary. When bits are reversed by switching between left and right of the orders of MSB and LSB of "0001", "1000" is obtained. When this "1000" is indicated with a decimal value corresponding to a binary format of the sampling data, the order "8" of the subcarrier which corresponds to the order of the sampling data is obtained. Accordingly, a relationship between x(1) and X(8) is bit reversal. Similarly, relationships between x(5) and X(10), x(12) and X(3), and x(13) and X(11) are bit reversal.

Here, when a pair of subcarrier data is focused on out of subcarrier data arranged in a bit-reversal order outputted from output terminal 450, it is only necessary to perform a part of operation out of operation circuits in butterfly operation unit 400 in order to obtain only the pair of subcarrier data which is a final output.

For example, in order to obtain only X(0) and X(8), it is only necessary to perform butterfly operation of a part bordered by dashed line 460 in FIG. 6. That is to say, the butterfly operation section required for calculating subcarrier data of X(0) and X(8) is only a part bordered by dashed line 460. Even if the butterfly operation of a part other than the part bordered by dashed line 460 is omitted, there is no influence on obtaining these subcarrier data.

When the number of points of sampling data is sixteen, in order to perform all the operation in butterfly operation unit 400 in FIG. 6, it is necessary to perform sixty four times of complex multiplication and sixty four times of complex addition. On the other hand, the butterfly operation of the part bordered by dashed line 460 is performed with thirty times of complex multiplication and sixteen times of complex addition, so that it is possible to omit thirty four times of complex multiplication and forty eight times of complex addition.

The omission of operation in the butterfly operation described above is not limited to the case of obtaining only X (0) and X(8), and it can be applied to a case of obtaining only X(4) and X(12), a case of obtaining only X(2) and X(10), a case of obtaining only X(6) and X(14), a case of obtaining only X(1) and X(9), a case of obtaining only X (5) and X (13), a case of obtaining only X(3) and X(11), and a case of obtaining only X(7) and X (15).

Furthermore, it is only necessary to perform butterfly operation of the part bordered by dashed line 470 in FIG. 6 in order to obtain only X(0), X(8), X(4), X(12), X(2), X(10), X(6), X(14). In this case, the butterfly operation of the part bordered by dashed line 470 is performed with forty times of complex multiplication and thirty two times of complex addition, so that it is possible to omit twenty four times of complex multiplication and thirty two times of complex addition. This example can be similarly applied to a case of obtaining only X(1), X(9), X(5), X(13), X(3), X(11), X(7), X(15).

By using this principle, unnecessary butterfly operation performed in butterfly operation unit 400 of FFT section 207 is omitted. In this embodiment, terminal station 200 extracts specific subcarrier data assigned by base station 100 from at least one of output terminal 450 of butterfly operation unit 400. For example, base station 100 divides sixteen subcarrier data arranged in a bit-reversal order into two, four, eight or sixteen sections and assigns the each sectioned subcarrier data to each terminal station. On the other hand, FFT section 207 of terminal station 200 performs only butterfly operation for extracting the subcarrier data assigned by base station 100, out of butterfly operation unit 400 and omits other butterfly operation.

For example, when the base station and four terminal stations are connected using a multiple access technique, as a method of assigning subcarriers when the base station assigns four subcarrier data to four terminal stations respectively and transmits a signal, the subcarrier data is assigned so that terminal station 1 extracts a combination of X(0), X(8), X(4), X(12), terminal station 2 extracts a combination of X(2), X(10), X(6), X(14), terminal station 3 extracts a combination of X(1), X(9), X(5), X(13), and terminal station 4 extracts a combination of X(3), X(11), X(7), X(15). Thereby, each terminal station performs only butterfly operation required for extracting four subcarrier data assigned by the base station, so that a power consumed by FFT operation is reduced by omitting other butterfly operation.

Similarly, when the base station and two terminal stations are connected using a multiple access technique, when the base station assigns eight subcarrier data to two terminal stations respectively and transmits a signal, the subcarrier data is assigned so that, for example, terminal station 1 extracts a combination of X(0), X(8), X(4), X(12), X(2), X(10), X(6), X(14), and terminal station 2 extracts a combination of X(1), X(9), X(5), X(13), X(3), X(11), X(7), X(15). Thereby, each terminal station performs only butterfly operation required for extracting eight subcarrier data assigned by the base station, so that a power consumed by FFT operation is reduced by omitting other butterfly operation.

Additionally, when the base station and three terminal stations are connected using a multiple access technique, the subcarrier data is assigned so that, for example, terminal station 1 extracts a combination of X(0), X(8), X(4), X(12), X(2), X(10), X(6), X(14), terminal station 2 extracts a combination of X(1), X(9), X(5), X(13), and terminal station 3 extracts a combination of X(3), X(11), X(7), X(15). Thereby, terminal station 1 performs only butterfly operation required for extracting eight subcarrier data assigned by the base station, terminal station 2 and terminal station 3 perform only butterfly operation required for extracting four subcarrier data assigned by the base station, so that a power consumed by FFT operation is reduced by omitting other butterfly operation.

In addition, it is not necessary to assign subcarriers from the base station to the terminal station per power of two (2, 4, 8 or 16 in this embodiment), and it is also possible to assign subcarrier data of the number other than the power of two to a specific terminal station. However, when the subcarrier data is assigned in this manner, it is preferable to prevent influence of the omission of the butterfly operation on other terminal stations. Namely, when a part of subcarrier data which is sectioned per power of two is assigned to a specific terminal station, unused subcarrier data in the segment is prevented from being assigned to other terminal stations.

For example, when the base station and four terminal stations are connected using a multiple access technique, X(0), X(8), X(4) are assigned to terminal station 1, X(2), X(10), X(6), X(14) are assigned to terminal station 2, X(1), X(9) are assigned to terminal station 3, and X(3) is assigned to terminal station 4.

In these examples, X(12), X(5), X(13), X(11), X(7), X(15) are subcarrier data that are not assigned to any terminal station. In short, it is preferable for the base station to assign subcarrier data so that, in each terminal station, each subcarrier data is extracted from two to the n-th power (n is a positive integer) butterfly operation sections whose output terminals are adjacent to each other. Here, the two to the n-th power butterfly operation sections whose output terminals are adjacent to each other are a combination of a pair of butterfly operation sections that outputs the subcarrier data described above. Thereby, each terminal station can omit the butterfly operation for efficiently extracting subcarrier data assigned by the base station.

As described above, according to this embodiment, the number of the sampling data and the subcarrier data is sixteen, so that, in addition to the advantages of Embodiment 1, it is possible to increase the number of terminal stations to which subcarriers are assigned, and diversify the assignment of subcarrier data to each terminal station.

(Embodiment 3)

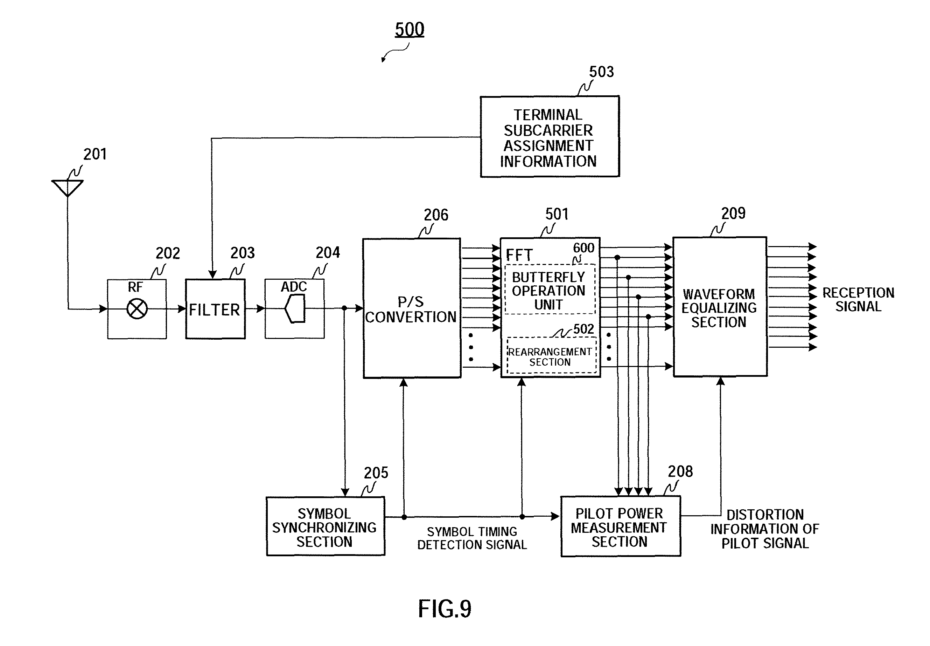

FIG. 9 shows a configuration of the terminal station of the OFDM communication apparatus according to Embodiment 3 of the present invention. Components that are the same as those of the terminal station according to Embodiment 1 will be assigned the same reference numerals without further explanation.

In FIG. 9, terminal station 500 has FFT section 501 instead of FFT section 207 in the configuration of terminal station 200 in FIG. 2. FFT section 501 has rearrangement section 502 and butterfly operation unit 600 in the configuration of FFT section 207. Also, terminal station 500 has terminal subcarrier assignment information storing section 503 that stores terminal subcarrier data assigned by the base station.

Rearrangement section 502 rearranges the alignment order of sampling data obtained from a time waveform of the OFDM signal inputted to FFT section 501 in a bit-reversal order and outputs the signal to input terminal 610 of butterfly operation unit 600 described later.

Butterfly operation unit 600 performs butterfly operation in which the subcarrier data is extracted from the signal inputted from P/S converting section 206. The operation of butterfly operation unit 600 is described in detail later.

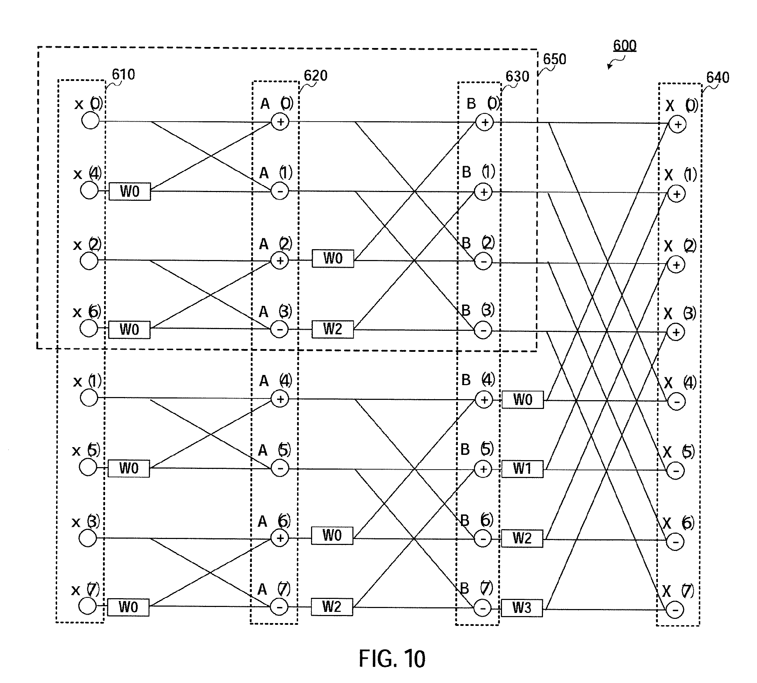

FIG. 10 shows a configuration of the butterfly operation unit of FFT section 501 described above. The example of FIG. 10 shows a signal flow of the butterfly operation for the case where eight subcarrier data are obtained using eight points of sampling data.

Aconfiguration of an input terminal side and a configuration of an output terminal side of butterfly operation unit 600 in FIG. 10 are left-right reversed from a configuration of butterfly operation unit 300 in FIG. 3, and the sampling data inputted to input terminal 610 of butterfly operation unit 600 is rearranged in a bit-reversal order by rearrangement section 502, and therefore the butterfly operation performed in butterfly operation unit 600 is the same as the butterfly operation performed in butterfly operation unit 300. In other words, a signal flow diagram of FIG. 10 is different from a signal flow diagram of FIG. 3 in that eight points of sampling data x (0) to x (7) are bit-reversed with reference to eight subcarrier data X(0) to X(7).

In FIG. 10, butterfly operation unit 600 includes input terminal 610 to which sampling data x(0) to x (7) are inputted, first node 620 configured with eight intermediate nodes A(0) to A(7), second node 630 that is provided at a following stage of first node 620 and configured with eight intermediate nodes B (0) to B(7), output terminal 640 that is provided at a following stage of second node 630 and outputs subcarrier data X(0) to X(7) that are butterfly operation outputs, and rotation factors W0 to W3 for complex operation.

Input terminal 610 is a terminal to which eight sampling data x (0) to x (7) is inputted as an input signal sequence obtained from the time waveform of the OFDM signal. The alignment order of the sampling data inputted to input terminal 610 has been rearranged in a bit-reversal order by rearrangement section 502 as described above.

First node 620 performs butterfly operation in which eight points of sampling data rearranged in a bit-reversal order are divided into four pairs of an upper part and a lower part(x(0) and x(4), x(2) and x(6), x(1) and x(5), and x(3) and x(7)), with respect to each pair, the sampling data of the upper part and data obtained by multiplying the sampling data of the lower part by rotation factor W0 are added, and data obtained by multiplying the sampling data of the lower part by rotation factor W0 is subtracted from the sampling data of the upper part. For example, intermediate node A (0) performs butterfly operation in which x (0) and data obtained by multiplying x (4) by W0 are added, and A(1) performs butterfly operation in which data obtained by multiplying x(4) by W0 is subtracted from x(0).

Upper nodes B(0) to B(3) of second node 630 divide data operated in upper nodes A(0) to A(3) of first node 620 into two--upper data and lower data--, and then perform butterfly operation in which the upper data and data obtained by multiplying the lower data by rotation factor W0 or W2 are added, and data obtained by multiplying the lower data by rotation factor W0 or W2 is subtracted from the upper data. Similarly, lower nodes B(4) to B(7) of second node 630 divide data operated in lower nodes A(4) to A(7) of first node 620 into two--upper data and lower data--, and perform butterfly operation in which the upper data and data obtained by multiplying the lower data by rotation factor W0 or W2 are added, and the data obtained by multiplying the lower data by rotation factor W0 or W2 is subtracted from the upper data.

Characteristics of first node 620 and second node 630 which are intermediate nodes in this embodiment are the same as those described in Embodiment 1. However, as described above, in butterfly operation unit 600, a configuration of an input terminal side and a configuration of an output terminal side are reversed from a configuration of butterfly operation unit 300 in FIG. 3. Therefore, first node 620 is made up of combinations of a one-to-one pair of the upper node and the lower node, and an intermediate node at a last stage (second node 630) is made up of upper nodes B(0) to B(3) and lower nodes B(4) to B(7).

Output terminal 640 is provided at a following stage of second node 630, divides data operated in second node 630 into two--upper data and lower data--, and is provided with a plurality of butterfly operation sections for performing butterfly operation in which the upper data and data obtained by multiplying the lower data by one of rotation factors W0 to W3 are added, and data obtained by multiplying the lower data by one of rotation factors W0 to W3 is subtracted from the upper data. Through this butterfly operation, subcarrier data X (0) to X (7) obtained using eight points of the sampling data x(0), x(4), ···, x(3), x(7) inputted to the input terminal 610 is generated and outputted.

Hereinafter, the butterfly operation according to this embodiment will be described.

Subcarrier data X(0) outputted from output terminal 640 of butterfly operation unit 600 in FIG. 10 is obtained by the following equation (15) and subcarrier data X(4) is obtained by the following equation (16).

$$X(0) = B(0) + W0 \cdot B(4) \cdots (15)$$

$$X(4) = B(0) - W0 \cdot B(4) \cdots (16)$$

The following equation (17) can be obtained by adding the right sides of both equations (15) and (16) and adding the left sides of both equations (15) and (16).

$$X(0) + X(4) = 2 \cdot B(0) \cdots (17)$$

Similarly, the following equations (18) to (20) can be obtained by performing the same operation as described above with respect to X(1) and X(5), X(2) and X(6), and X(3) and X(7).

$$X(1) + X(5) = 2 \cdot B(1) \cdots (18)$$

$$X(2) + X(6) = 2 \cdot B(2) \cdots (19)$$

$$X(3) + X(7) = 2 \cdot B(3) \cdots (20)$$

Now, when it is assumed that X(4) = X(5) = X(6) = X(7) = 0 in the equations (17) to (20), the equations (17) to (20) become the following equations (21) to (24).

$$X(0) = 2 \cdot B(0) \cdots (21)$$

$$X(1) = 2 \cdot B(1) \cdots (22)$$

$$X(2) = 2 \cdot B(2) \cdots (23)$$

$$X(3) = 2 \cdot B(3) \cdots (24)$$

It can be learned from the above equations (21) to (24) that, if a condition of X(4) = X(5) = X(6) = X(7) = 0 is satisfied, subcarrier data X(0) to x(3) is obtained using twice of data operated in upper nodes B(0) to B(3) of second node 630 and outputted.

Therefore, it is enough to perform only butterfly operation of a part bordered by dashed line 650 in FIG. 10 in order to obtain only subcarrier data X(0) to x(3) under the condition of X(4) = X(5) = X(6) = X(7) = 0.

When the number of points of sampling data is eight, in order to perform all the operation in butterfly operation unit 600 in FIG. 10, it is necessary to perform twenty four times of complex multiplication and twenty four times of complex addition. On the other hand, the butterfly operation of the part bordered by dashed line 650 is performed with eight times of complex multiplication and eight times of complex addition, so that it is possible to omit sixteen times of complex multiplication and sixteen times of complex addition. By omitting the butterfly operation, it is possible to largely reduce a power consumed by FFT operation as with Embodiment 1 and Embodiment 2 described above.

The omission of the operation in the butterfly operation described above is not limited to the case of obtaining only X (0) to X(3), and it can be applied to a case of obtaining X(4) to X(7). In this case, it is necessary to perform butterfly operation under the condition of X(0) = X(1) = X(2) = X(3) = 0.

By using this principle, unnecessary butterfly operation performed in butterfly operation unit 600 of FFT section 501 is omitted. In this embodiment, output terminal 640 in terminal station 500 operates and extracts specific subcarrier data from data operated in at least one of intermediate nodes at a final stage. Therefore, in butterfly operation unit 600, the butterfly operation sections configuring output terminal 640 are divided into two--upper part and lower part--, and, when the subcarrier data is extracted from the upper part of the butterfly sections, the subcarrier data used for the operation in the lower part of the butterfly operation sections is set to zero (null), and, when the subcarrier data is extracted from the lower part of the butterfly operation sections, the subcarrier data used for the operation of the upper part of the butterfly operation sections is set to zero (null), using any method.

Namely, the base station divides the butterfly operation sections configuring output terminal 640 which extracts the subcarrier data arranged in a forward direction with respect to a time axis into two--the upper part and the lower part--, and, when the subcarrier is assigned to the butterfly operation section of the upper part of output terminal 640, the subcarrier assigned to the butterfly operation section of the lower part of corresponding output terminal 640 is set to null. On the other hand, when the subcarrier is assigned to the butterfly operation section of the lower part of output terminal 640, the subcarrier assigned to the butterfly operation section of the upper part of corresponding output terminal 640 is set to null. Meanwhile, the terminal station operates and extracts subcarrier data only from an operation result obtained in the intermediate node corresponding to the order of the assigned subcarrier data out of intermediate nodes provided at a preceding stage of output terminal 640 using the above-described principle.

For example, when the base station and two terminal stations are connected using a multiple access technique, as a method of assigning subcarriers when the base station assigns two subcarrier data to two terminal stations respectively and transmits a signal, the subcarrier data is assigned so that terminal station 1 extracts a combination of X(0) and X(1), and terminal station 2 extracts a combination of X(2) and X(3). At this time, the base station does not use subcarrier data X(4) to X(7) and assigns these subcarrier as a null subcarrier, because, in each terminal station, in order to omit the butterfly operation for obtaining X(0) and X(1), it is necessary to set X(4) = X(5) = 0, and, in order to omit the butterfly operation for obtaining X (2) and X (3), it is necessary to set X(6) = X(7) = 0.

It is also possible to assign X(4) to X(7) to the terminal station by setting subcarrier data X(0) to X(3) as a null subcarrier.

In the example described above, it is necessary to set the half number of subcarriers assigned to the OFDM signal to be transmitted by the base station to null in order to omit the butterfly operation in each terminal station. Meanwhile, a method is also available of filtering in which a part of the subcarrier is set to null to omit the butterfly operation in each terminal station. Hereinafter, this method will be described.

The base station transmits a signal to each terminal station without using null subcarrier data as subcarrier data assigned to the OFDM signal. Meanwhile, when subcarrier data from the base station is assigned to the butterfly operation section of the upper part of output terminal 640 according to the terminal subcarrier data assigned by the base station read out from terminal subcarrier assignment information storing section 503, terminal station 500 performs filtering to set the subcarrier assigned to the butterfly operation section of the lower part of corresponding output terminal 640 to null. Meanwhile, when the subcarrier data from the base station is assigned to the butterfly operation section of the lower part of output terminal 640, terminal station 500 performs filtering to set the subcarrier assigned to the butterfly operation section of the upper part of corresponding output terminal 640 to null. As described above, terminal station 500 operates and extracts subcarrier data only from an operation result of the intermediate node corresponding to the order of the assigned subcarrier data out of intermediate nodes provided at a preceding stage of output terminal 640, and omits other unnecessary butterfly operation.

For example, when the base station and four terminal stations are connected using a multiple access technique, as a method of assigning subcarriers when the base station assigns two subcarrier data to four terminal stations respectively and transmits a signal, the subcarrier data is assigned so that terminal station 1 extracts a combination of X(0) and X(1), and terminal station 2 extracts a combination of X(2) and X(3), terminal station 3 extracts a combination of X (4) and X(5), and terminal station 4 extracts a combination of X(6) and X(7).

Additionally, filtering is performed on the time waveform of the received OFDM signal respectively so that X (4) = X(5) = 0 in terminal station 1, X(6) = X(7) = 0 in terminal station 2, X(0) = X(1) = 0 in terminal station 3, and X(2) = X (3) = 0 in terminal station 4.

According to this method, the base station can transmit the OFDM signal to more terminal stations without assigning a null subcarrier. Also, each terminal station can omit the butterfly operation which is unnecessary for the terminal station and suppress power consumption of a battery at a maximum.

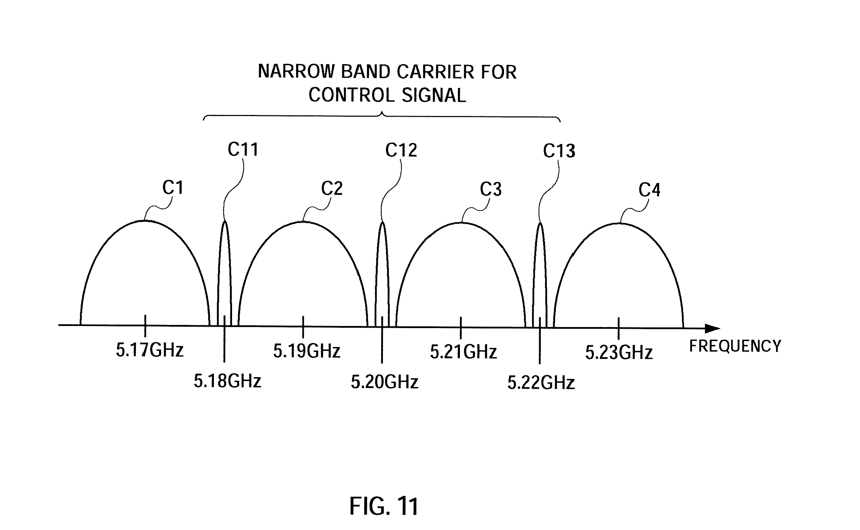

FIG. 11 shows a frequency characteristic indicating an example of carrier arrangement disclosed in patent document 1 described above.

A plurality of frequency band used for information transmission in OFDM communication is continuous. In the example of FIG. 11, communication band of C1 is used for communication from the base station to a certain terminal station, and communication band of C2 is used for communication from the base station to another terminal station. In such case, in order to reduce a leakage carrier from the band near the communication band assigned to the terminal station, each terminal station is commonly provided with a filter that limits the band near the terminal station.

It is possible to realize the filter for setting a specific subcarrier provided in each terminal station to null by adaptively changing the number of taps or filter coefficients of an adjacent band limitation filter commonly provided, and set the desired specific subcarrier to null. Namely, it is possible to provide the filter for setting the specific subcarrier to null to the terminal station without increasing cost, and the commonly provided filter is used, and therefore power consumption of the battery does not increase due to the circuit operation with the filter.

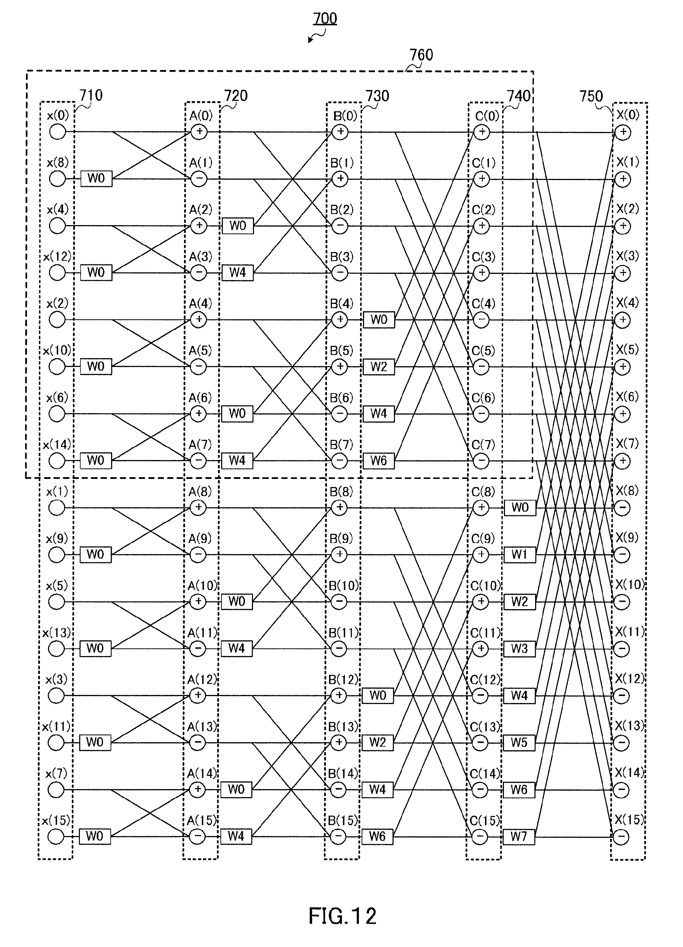

In addition, this embodiment can be applied to a case of obtaining sixteen subcarrier data using sixteen points of sampling data. This case will be explained using FIG. 12.

FIG. 12 shows a configuration of the butterfly operation unit for the case where the number of points of sampling data of the FFT section according to Embodiment 3 of the present invention is sixteen. The example of FIG. 12 shows a signal flow of the butterfly operation for the case where sixteen subcarrier data are obtained using sixteen points of sampling data.

In FIG. 12, butterfly operation unit 700 includes input terminal 710 to which sampling data x(0) to x(15) are inputted, first node 720 configured with sixteen intermediate nodes A(0) to A(15), second node 730 that is provided at a following stage of first node 720 and configured with sixteen intermediate nodes B(0) to B(15), third node 740 that is provided at a following stage of second node 730 and configured with sixteen intermediate nodes C(0) to C(15), output terminal 750 that is provided at a following stage of third node 740 and outputs subcarrier data X(0) to X(15) which are outputs of the butterfly operation, and rotation factors W0 to W7 for complex operation.

Components of butterfly operation unit 700 are as described above, and therefore the explanations thereof will be omitted.

Subcarrier data X(0) outputted from output terminal 750 of butterfly operation unit 700 in FIG. 12 is obtained by the following equation (25), and subcarrier data X(8) is obtained by the following equation (26).

$$X(0) = C(0) + W0 \cdot C(8) \quad \cdots \quad (25)$$

$$X(8) = C(0) - W0 \cdot C(8) \quad \cdots \quad (26)$$

Additionally, the following equation (27) can be obtained by adding the right sides of both equations (25) and (26) and adding the left sides of both equations (25) and (26).

$$X(0) + X(8) = 2 \cdot C(0) \quad \cdots \quad (27)$$

Similarly, the following equations (28) to (34) can be obtained by performing the same operation described above with respect to X(1) and X(9), X(2) and X(10), X(3) and X(11), X(4) and X(12), X(5) and X(13), X(6) and X(14), and X(7) and X(15).

$$X(1) + X(9) = 2 \cdot C(1) \quad \cdots \quad (28)$$

$$X(2) + X(10) = 2 \cdot C(2) \quad \cdots \quad (29)$$

$$X(3) + X(11) = 2 \cdot C(3) \quad \cdots \quad (30)$$

$$X(4) + X(12) = 2 \cdot C(4) \quad \cdots \quad (31)$$

$$X(5) + X(13) = 2 \cdot C(5) \quad \cdots \quad (32)$$

$$X(6) + X(14) = 2 \cdot C(6) \cdots (33)$$

$$X(7) + X(15) = 2 \cdot C(7) \cdots (34)$$

Now, when X(8) = X(9) = X(10) = X(11) = X(12) = X(13) = X(14) = X(15) = 0 in the equations (27) to (34), the equations (27) to (34) become the following equations (35) to (42).

$$X(0) = 2 \cdot C(0) \cdots (35)$$

$$X(1) = 2 \cdot C(1) \cdots (36)$$

$$X(2) = 2 \cdot C(2) \cdots (37)$$

$$X(3) = 2 \cdot C(3) \cdots (38)$$

$$X(4) = 2 \cdot C(4) \cdots (39)$$

$$X(5) = 2 \cdot C(5) \cdots (40)$$

$$X(6) = 2 \cdot C(6) \cdots (41)$$

$$X(7) = 2 \cdot C(7) \cdots (42)$$

It can be learned from the above equations (35) to (42) that subcarrier data X(0) to X(7) are obtained using twice of data operated in upper parts C(0) to C(7) of third node 740 and outputted.

Therefore, it is only necessary to perform the butterfly operation of a part bordered by dashed line 760 in FIG. 12 in order to obtain only subcarrier data X(0) to X(7).

When the number of points of sampling data is sixteen, it is necessary to perform sixty four times of complex multiplication and sixty four times of complex addition in order to perform all the operation in butterfly operation unit 700 in FIG. 12. On the other hand, butterfly operation of the part bordered by dashed line 760 is performed with twenty four times of complex multiplication and twenty four times of complex addition, so that it is possible to omit forty times of complex multiplication and forty times of complex addition.

The omission of the operation of the butterfly operation described above is not limited to the case of obtaining only X(0) to X(7), and can be similarly applied to a case of obtaining X(8) to X(15). In this case, it is necessary to set X(0) = X(1) = X(2) = X(3) = X(4) = X(5) = X(6) = X(7) = 0.

By using this principle, unnecessary butterfly operation performed in butterfly operation unit 700 of FFT section 501 is omitted.

For example, when the base station and two terminal stations are connected using a multiple access technique, as a method of assigning subcarriers when the base station assigns four subcarrier data to two terminal stations respectively and transmits a signal, the subcarrier data is assigned so that terminal station 1 extracts a combination of X(0), X(1), X(2), X(3) and terminal station 2 extracts a combination of X(4), X(5), X(6), X(7). At this time, subcarrier data X(8) to X(15) are not used and these subcarrier are set as null subcarriers, because it is necessary to set X(8) = X(9) = X(10) = X(11) = 0, in order to omit the butterfly operation for obtaining X(0), X(1), X(2), X(3), and it is necessary to set X(12) = X(13) = X(14) = X(15) = 0, in order to omit the butterfly operation for obtaining X(4), X(5), X(6), X(7).

It is also possible to assign subcarrier data X(0) to X(7) as null subcarriers and assign X (8) to X(15) to terminal stations.

Next, a filtering method will be described of setting a part of the subcarrier to null and omitting the butterfly operation in each terminal station.

For example, when the base station and four terminal stations are connected using a multiple access technique, as a method of assigning subcarriers when the base station assigns four subcarrier data to four terminal stations respectively and transmits a signal, the subcarrier data is assigned so that terminal station 1 extracts a combination of X (0), X(1), X(2), X(3), terminal station 2 extracts a combination of X(4), X(5), X(6), X(7), terminal station 3 extracts a combination of X(8), X(9), X(10), X(11), and terminal station 4 extracts a combination of X(12), X(13), X(14), X(15).

Filtering is performed on the time waveform of the received OFDM signal so that X(8) = X(9) = X(10) = X(11) = 0 in terminal station 1, X(12) = X(13) = X(14) = X (15) = 0 in terminal station 2, X(0) = X(1) = X(2) = x(3) = 0 in terminal station 3, and X(4) = X(5) = X(6) = X(7) = 0 in terminal station 4.

By this means, each terminal station can omit the butterfly operation which is unnecessary for the terminal station and suppress a power consumption of a battery at a maximum.

In addition, the number of terminal stations to which subcarriers are assigned and the number of subcarrier data to be assigned can be changed accordingly, as with the case of Embodiment 1 and Embodiment 2.

Thus, according to this embodiment, base station 100 assigns sampling data arranged in a direction of a bit-reversal order with respect to a time axis, to terminal station 500 as specific subcarrier data, and terminal station 500 sets data operated in at least one of butterfly operation sections of a plurality of intermediate nodes to null out of the butterfly operation sections of the plurality of intermediate nodes and output terminals, and extracts data operated in the butterfly operation section corresponding to this null subcarrier data as the specific subcarrier data assigned to terminal station 500 from the output terminal, so that it is possible to reduce a power consumption by FFT operation and efficiently use a battery in each terminal station.

Specifically, in this embodiment, terminal station 500 can adaptively change the butterfly operation sections for extracting the null subcarrier data out of transmission signals from base station 100, so that it is possible to diversify variations for extracting the subcarrier data assigned to the OFDM communication signal and realize a system with greater flexibility compared to Embodiment 1 and Embodiment 2 described above.

Also, the filter for setting specific subcarrier data to null is commonly provided and can be provided in terminal station 500 without increasing cost, and it provides the advantages of being realized in low cost and being readily implemented.

In addition, in the above-described embodiments, the case has been described where the number of sampling data and subcarrier data is eight or sixteen, but the present invention is not limited to this. Namely, the number of the sampling data and the subcarrier data may be the number which can be indicated with a power of two, and, for example, four, thirty two, sixty four and the like can be used as the number other than the above-described embodiments.

According to the present invention, in the OFDM communication, when each terminal station performs FFT on the OFDM signal from the base station and regenerates the subcarrier assigned by the base station, the terminal station omits a part of the butterfly operation and unnecessary FFT operation, so that it is possible to reduce a power consumed by FFT operation and efficiently use a battery of each terminal.

According to the present invention, in the OFDM communication, by performing communication between the base station and the terminal station with a combination of specific subcarriers and operating only the butterfly operation parts corresponding to the subcarriers assigned to the terminal station, it is possible to suppress the battery power consumed in the terminal station.

The fast Fourier transformation apparatus, OFDM communication apparatus and subcarrier assignment method for OFDM communication according to the present invention, provide an advantage of omitting unnecessary FFT operation upon reception and reducing a power consumed by the FFT operation in the OFDM communication, and are useful as a fast Fourier transformation apparatus, OFDM communication apparatus and subcarrier assignment method for OFDM communication used for terrestrial digital broadcasting, wireless LAN and ADSL.

## Claims

1. A fast Fourier transformation apparatus (207) comprising:

   an input terminal (310) to which a first and a second data sequences are inputted as sampling data;
   a first intermediate node (320) that performs butterfly operation in which a data sequence obtained by multiplying the first data sequence by a complex operation factor is added to or subtracted from the second data sequence;
   a second intermediate node (330) to which two data sequences obtained by dividing an output of said first intermediate node into two are inputted, and which, with respect to each of the divided two data sequences, performs butterfly operation in which one data sequence multiplied by a complex operation factor is added to or subtracted from the other data sequence;

an output terminal (340) that is provided at an output side of said second intermediate node and provided with a plurality of butterfly operation sections for performing butterfly operation in which one data sequence multiplied by a complex operation factor is added to or subtracted from the other data sequence; and

a rearranging section that supplies a sampling data arranged in a forward direction with respect to a time axis to said input terminal,

wherein, when the sampling data arranged in a forward direction with respect to the time axis is received, specific subcarrier data is extracted from at least one of the plurality of butterfly operation sections of said output terminal.

2. The fast Fourier transformation apparatus according to claim 1, wherein butterfly operation is performed by only a butterfly operation section relating to extraction of the specific subcarrier data out of butterfly operation sections of said first intermediate node, said second intermediate node and said output terminal.

3. The fast Fourier transformation apparatus according to claim 1, wherein, out of the butterfly operation sections of said first intermediate node, said second intermediate node and said output terminal, butterfly operation performed by a butterfly operation section other than a butterfly operation section relating to the extraction of the specific subcarrier data is prohibited.

4. The fast Fourier transformation apparatus according to claim 1, wherein, out of the plurality of butterfly operation sections of said output terminal, butterfly operation sections which extract the specific subcarrier data are adjacent to each other.

5. A fast Fourier transformation apparatus (500) comprising:

an input terminal (610) to which a first and a second data sequences are inputted as sampling data;
a plurality of intermediate nodes (620, 630) that are provided corresponding to the number of sampling data inputted to said input terminal and perform butterfly operation in which a data sequence obtained by multiplying the first data sequence by a complex operation factor is added to or subtracted from the second data sequence;
an output terminal (640) that is provided at an output side of the plurality of the intermediate nodes and performs butterfly operation in which one data sequence multiplied by a complex operation factor is added to or subtracted from the other data sequence; and
a rearranging section that supplies a sampling data arranged in a forward direction with respect to a time axis to said input terminal,
wherein, out of butterfly operation sections of said plurality of the intermediate nodes and said output terminal, data operated by at least one of butterfly operation sections of said plurality of the intermediate nodes are extracted from said output terminal as specific subcarrier data.

6. The fast Fourier transformation apparatus according to claim 5, wherein, butterfly operation is performed by only a butterfly operation section relating to the extraction of the specific subcarrier data out of butterfly operation sections of said plurality of intermediate nodes and said output terminal.

7. The fast Fourier transformation apparatus according to claim 5, wherein, when the specific subcarrier data is extracted from said output terminal, subcarrier data operated by at least one of butterfly operation sections of said plurality of intermediate nodes is set to null.

8. An OFDM communication apparatus which comprises a base station (100) that transmits an OFDM communication signal to which specific subcarrier data is assigned to a terminal station and a terminal station (200) which receives the OFDM communication signal to extract the specific subcarrier data assigned by the base station, wherein:

the base station comprises an assigning section that assigns sampling data arranged in a forward direction with respect to a time axis to the terminal station as the specific subcarrier data;
the terminal station comprises:

an input terminal (310) to which a first and a second data sequences are inputted as sampling data;
a first intermediate node (320) that performs butterfly operation in which a data sequence obtained by multiplying the first data sequence by a complex operation factor is added to or subtracted from the second data sequence;
a second intermediate node (330) to which two data sequences obtained by dividing an output of the first intermediate node into two are inputted, and which, with respect to each of the divided two data sequences, performs butterfly operation in which one data sequence multiplied by a complex operation factor is added to or subtracted from the other data sequence; and
an output terminal (340) that is provided at an output side of the second intermediate node and provided with a plurality of butterfly operation sections for performing butterfly operation in which one data sequence multiplied by a complex operation factor is added to or subtracted from the other data sequence; and

when the sampling data arranged in a forward direction with respect to the time axis is received from the base station, the specific subcarrier data is extracted from at least one of the plurality of butterfly operation sections of the output terminal.

9. An OFDM communication apparatus which comprises a base station (100) that transmits an OFDM communication signal to which specific subcarrier data is assigned to a terminal station, and a terminal station (500) that receives the OFDM communication signal to extract the specific subcarrier data assigned by the base station, wherein:

the base station comprises an assigning section that assigns sampling data arranged in a bit reversal direction with respect to a time axis to the terminal station as the specific subcarrier data;
the terminal station comprises:

an input terminal (610) to which a first and a second data sequences are inputted as the sampling data;
a plurality of intermediate nodes (620, 630) that are provided corresponding to the number of the sampling data inputted to the input terminal and perform butterfly operation in which a data sequence obtained by multiplying the first data sequence by a complex operation factor is added to or subtracted from the second data sequence; and
an output terminal (640) that is provided at an output side of the plurality of the intermediate nodes and provided with a plurality of butterfly operation sections for performing butterfly operation in which one data sequence multiplied by a complex operation factor is added to or subtracted from the other data sequence; and

out of butterfly operation sections of the plurality of the intermediate nodes and the output terminal, data operated by at least one of butterfly operation sections of the plurality of the intermediate nodes are extracted from the output terminal as the specific subcarrier data.

10. A subcarrier assignment method for OFDM communication, wherein an OFDM communication signal to which specific subcarrier data is assigned is transmitted from a base station (100) to a terminal station (200) and the OFDM communication signal is received to extract the specific subcarrier data assigned by the base station, the method comprising:

in the base station,
assigning sampling data arranged in a forward direction with respect to a time axis to the terminal station as the specific subcarrier data;
in the terminal station,
inputting a first and a second data sequences transmitted from the base station as sampling data;
performing first butterfly operation in which a data sequences obtained by multiplying the first data sequence by a complex operation factor is added to or subtracted from the second data sequence;
performing second butterfly operation with an output of the first butterfly operation which is divided into two and inputted, in which one data sequence multiplied by a complex operation factor is added to or subtracted from the other data sequence; and
performing a plurality of butterfly operation in which one data sequence multiplied by a complex operation factor is added to or subtracted from the other data sequence at an output side of the second butterfly operation, wherein, when the sampling data arranged in a forward direction with respect to the time axis is received from the base station, the specific subcarrier data is extracted from at least one of the plurality of butterfly operation.

11. The subcarrier assignment method for an OFDM communication according to claim 10, wherein, with respect to the step of performing butterfly operation, only butterfly operation relating to extraction of the specific subcarrier data is performed.

**12.** A subcarrier assignment method for OFDM communication, wherein an OFDM communication signal to which specific subcarrier data is assigned is transmitted from a base station (100) to a terminal station (500) and the OFDM communication signal is received to extract the specific subcarrier data assigned by the base station, the method comprising:

in the base station,
assigning sampling data arranged in a bit reversal direction with respect to a time axis to the terminal station as the specific subcarrier data;
in the terminal station,
inputting a first and a second data sequences transmitted from the base station as sampling data;
performing first butterfly operation in which a data sequence obtained by multiplying the first data sequence by a complex operation factor is added to or subtracted from the second data sequence; and
performing second butterfly operation in which one data sequence multiplied by a complex operation factor is added to or subtracted from the other data sequence at an output side of the first butterfly operation,
wherein in the step of performing the butterfly operation, the specific subcarrier data is extracted by performing only the butterfly operation relating to extraction of the specific subcarrier data out of the first butterfly operation and the second butterfly operation.

FIG. 1

EP 1 821 476 A2

FIG.2

EP 1 821 476 A2

FIG.3

EP 1 821 476 A2

FIG.4

EP 1 821 476 A2

| ORDER OF SAMPLING DATA | | BINARY VALUE | | REVERSAL OF BINARY VALUE | | ORDER OF SUBCARRIER DATA |
|---|---|---|---|---|---|---|
| 0 | → | 000 | → | 000 | → | 0 |
| 1 | → | 001 | → | 100 | → | 4 |
| 2 | → | 010 | → | 010 | → | 2 |
| 3 | → | 011 | → | 110 | → | 6 |
| 4 | → | 100 | → | 001 | → | 1 |
| 5 | → | 101 | → | 101 | → | 5 |
| 6 | → | 110 | → | 011 | → | 3 |
| 7 | → | 111 | → | 111 | → | 7 |

FIG.5

FIG.6

W0 : 1+0i

W1 : W0 $e^{i(1/16) \cdot 2\pi}$

W2 : W0 $e^{i(2/16) \cdot 2\pi}$

W3 : W0 $e^{i(3/16) \cdot 2\pi}$

W4 : W0 $e^{i(4/16) \cdot 2\pi}$

W5: W0 $e^{i(5/16) \cdot 2\pi}$

W6 : W0 $e^{i(6/16) \cdot 2\pi}$

W7 : W0 $e^{i(7/16) \cdot 2\pi}$

W8 : W0 $e^{i(8/16) \cdot 2\pi}$
=-W0

W9 : W0 $e^{i(9/16) \cdot 2\pi}$
=-W1

W 10 : W0 $e^{i(10/16) \cdot 2\pi}$
=-W2

W 11 : W0 $e^{i(11/16) \cdot 2\pi}$
=-W3

W12: W0 $e^{i(12/16) \cdot 2\pi}$
=-W4

W13 : W0 $e^{i(13/16) \cdot 2\pi}$
=-W5

W14 : W0 $e^{i(14/16) \cdot 2\pi}$
=-W6

W15 : W0 $e^{i(15/16) \cdot 2\pi}$
=-W7

FIG.7

32

| ORDER OF SAMPLING DATA | | BINARY VALUE | | REVERSAL OF BINARY VALUE | | ORDER OF SUBCARRIER DATA |
|---|---|---|---|---|---|---|
| 0 | → | 0000 | → | 0000 | → | 0 |
| 1 | → | 0001 | → | 1000 | → | 8 |
| 2 | → | 0010 | → | 0100 | → | 4 |
| 3 | → | 0011 | → | 1100 | → | 12 |
| 4 | → | 0100 | → | 0010 | → | 2 |
| 5 | → | 0101 | → | 1010 | → | 10 |
| 6 | → | 0110 | → | 0110 | → | 6 |
| 7 | → | 0111 | → | 1110 | → | 14 |
| 8 | → | 1000 | → | 0001 | → | 1 |
| 9 | → | 1001 | → | 1001 | → | 9 |
| 10 | → | 1010 | → | 0101 | → | 5 |
| 11 | → | 1011 | → | 1101 | → | 13 |
| 12 | → | 1100 | → | 0011 | → | 3 |
| 13 | → | 1101 | → | 1011 | → | 11 |
| 14 | → | 1110 | → | 0111 | → | 7 |
| 15 | → | 1111 | → | 1111 | → | 15 |

FIG.8

FIG.9

FIG. 10

EP 1 821 476 A2

NARROW BAND CARRIER FOR
CONTROL SIGNAL

C11　　　　C12　　　　C13

C1　　　　　C2　　　　C3　　　　C4

5.17GHz　　　5.19GHz　　　5.21GHz　　　5.23GHz　　FREQUENCY

5.18GHz　　　5.20GHz　　　5.22GHz

FIG. 11

EP 1 821 476 A2

36

FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006041509 A

- JP 2003249908 A